# EUROPEAN PATENT SPECIFICATION

(11) **EP 4 291 131 B1**
(45) Date of publication and mention of the grant of the patent: **29.10.2025**
(21) Application number: 22703679.5
(22) Date of filing: 09.02.2022
(51) Int. Cl.: A61C 8/00

(54) **ABUTMENT ARRANGEMENT**
AUFBAU EINES ABUTMENTS
ENSEMBLE BUTÉE

(30) Priority: 10.02.2021 CH 1272021
(43) Date of publication of application: 20.12.2023
(73) Proprietor: Institut Straumann AG, 4052 Basel (CH)
(72) Inventor: FISCHLER, Felix, 68220 Hagenthal le Haut (FR); ZIMMERMANN, Ruben Gerrit Sascha, 79104 Freiburg i.Br. (DE)
(74) Representative: Michalski Hüttermann & Partner Patentanwälte mbB
(86) International application number: PCT/EP2022/053152
(87) International publication number: WO 2022/171689

(56) References cited:
- EP-A1- 3 573 568
- EP-B1- 3 573 568
- WO-A1-2008/077443
- WO-A1-2018/060194
- WO-A1-2020/212968

## Description

### Technical Field

The present invention relates to an abutment assembly for connecting a dental restoration to a dental implant, comprising a post body and a screw arrangement, wherein the post body has an apical aperture, an occlusal aperture and an axial passage extending between the apical aperture and the occlusal aperture, and wherein the screw arrangement has an occlusal head portion and an apical fastening thread portion. Such assemblies can be used to connect a dental restoration to a dental implant.

### Background Art

Today, often damaged or lost teeth are replaced by artificial teeth comprised by dental restorations such as bridges, crowns or the like. Thereby, the dental restorations are placed either on remainders of original teeth or on implants set as artificial roots into jaw bones. Known dental restorations usually are made of materials which meet specific requirements such as biocompatibility, robustness, longevity and the like. For example, in non-exposed sections of the mouth metal dental restorations, e.g. made of gold or zirconium, are often used. In sections of the mouth being visible, usually other materials are preferred which optically better suit to the appearance of natural teeth. For example, ceramic materials, composite materials, fiber-reinforced composites or acrylic glasses (Polymethylmethacrylate - PMMA) are commonly used.

As mentioned, the materials of the crowns are typically chosen taking into consideration the requirements for being used as teeth such aesthetic requirements, mechanical conditions and the like. Flowever, for being directly placed on implants which are typically made of titanium or on remainders of original teeth these materials are often not suitable. Therefore, usually an intermediate structure is provided between the dental restoration and the implant or remainder. Widespread intermediate structures are bases or abutments which are cemented to the crowns or restorations. For example, for being connected to titanium implants often crowns are cemented and/or bonded to titanium bases which are then placed on and connected to the implant.

Typically, restorations are cemented on bases or abutments outside or inside the mouth by a dental technician or dentist. Thereby, specific adhesives are used as cements wherein many types of cement are mixed with plural components before being applied. The cemented bases and restorations are then connected to the implants or remainders in the mouth wherein the bases contact the implants or remainders. Often, the dental restoration together with the base is fixed to the implant by means of a screw axially projecting through the dental restoration and the base into the implant.

For accurately cementing a dental restoration on a base, often a model is used. For that purpose, at least a portion of the mouth in which an implant is set for mounting the dental restoration is modelled by a dental technician or a dentist using known modelling techniques. Hlowever, even though such model-based cementing allows for precisely cementing the restoration to the base and for providing sophisticated cemented restoration-base-structures it is comparably cumbersome.

To make the cementing process faster and cheaper many dental technicians or dentists do manually cement the dental restoration to the base. Thereby, often a screw hole of the base which typically has a hollow interior is closed by a piece of wax or an elastic plug such that no cement can enter the interior of the base. The elastic plug typically is adapted to the geometry of the base in order to allow a safe closing. Hlowever, considering that dental restorations and particularly bases usually are comparably small such manual cementing often provides results of reduced quality.

For example, often the cement is not regularly or uniformly distributed between the dental restoration and the base such that the connection is not consistently strong. Also, often the dental restoration can manually not be precisely positioned or oriented such that a reduced comfort and a reduced usability may result. Furthermore, overdosed cement may escape the restoration-base-structure which can lead to inflammation of the gum or the like.

For facing these drawbacks WO 2018/060194 A1, suggests a conveniently applicable cement free system to connect dental restorations to dental implants. In particular, an abutment arrangement with a post body, e.g., a base, and a screw element is described. The post body has an axial passage equipped with a head slot, a press section limiting the head slot and an expansion part. The screw element has a head section, a thread section axially distant from the head section and a spreading section. The outer diameter of the expansion part of the post body is elastically increasable by applying a lateral force. The screw element is arrangeable in the passage of the post body such that the head section is positioned in the head slot abutting the press section and such that the screw element extends out of the post body.

When used in the abutment arrangement described in WO 2018/060194 A1, the screw element has multiple effects when being screwed into the implant. On one hand, by abutting the press section of the passage of the post body, it presses the post body onto the dental implant such that a firm connection to the implant is established. On the other hand, by the spreading section of the screw element being arranged at the pressure receiving section of the passage of the post body, a lateral force is applied to the expansion part of the post body such that the screw element expands the post body at its expansion part. In particular, the expansion part is expanded into a corresponding recess or cavity provided in the dental restoration such that the dental restoration is firmly connected to the post body. Thereby, no cementing is necessary which allows for making the restoration process essentially faster, more efficient and safer.

However, even though the system described in WO 2018/060194 A1 can be beneficial compared to known systems, it involves high demands as to its production tolerances. In particular, the distance between the press section and the expansion part of the post body as well as the dimensions of the expansion part of the post body and the spreading section of the screw element have to precisely match such that an accurate connection of the dental restoration to the post body and fixation of the post body to the implant can be established by the screw element. More specifically, precisely dimensioning the shape (length and width) of the spreading section of the screw element and of the expansion part of the post body such that they accurately mate and interact in use can be highly challenging.

WO 2020/212968 A1 describes a dental abutment comprising a cylindrical abutment body and a tubular reconstruction element support; the abutment body is couplable to a dental implant and comprises a flat support end, the reconstruction element support has a proximal anchoring head portion configured with at least one slot, and a distal seat end bearing flush against the flat support end of the abutment body, said reconstruction element support is further configured with an axially extending through-going head bore, whereby the reconstruction element support is coupled to the abutment body by a manipulating fastener extending through the bore, and wherein axial fastening the fastener entails radial expansion of the anchoring head.

Therefore, there is a need for an efficiently manufacturable and applicable system that allows a precise and safe connection of a dental restoration to a dental implant.

### Disclosure of the Invention

According to the invention this need is settled by an abutment arrangement as defined by the features of the independent claim. Preferred embodiments are subject of the dependent claims.

In one aspect, the invention relates to an abutment assembly for connecting a dental restoration to a dental implant. The term "dental restoration" as used herein can relate to a dental prosthesis typically being the outermost structure of one artificial tooth or plural artificial teeth. It can particularly be a crown or a bridge or the like. The dental restoration can cap or encircle the dental implant and form the visible portion of the artificial tooth or teeth and its chewing face(s). Advantageously, it has the shape of the tooth or teeth to be replaced by the restoration. Typically, restorations such as crowns are made of a metal, a metal ceramic, a ceramic, zirconium, zirconium dioxide, polymethylmethacrylate (PMMA), a composite, a fiber-reinforced composite or another material having color and properties similar to natural teeth.

The term "dental implant" as used herein can relate to a surgical component that interfaces with the bone of the jaw or skull to support the dental restoration. It can act as an orthodontic anchor or being an artificial tooth root. Dental implants are also known in the art as endosseous implants or fixtures. Typically, dental implants are placed in a hole in a bone structure (e.g. jaw bone) where they are fixed or grown in by a biologic process called osseointegration. Thereby, the dental implants or more particularly their materials, such as titanium, form an intimate bond to the bone. For osseointegration a variable amount of healing time is required before the dental restoration is either attached directly or via an abutment.

In general, dental implants may be used to replace a tooth or several teeth in the mouth of a patient. They typically comprise an anchoring part, which is inserted into the jaw bone of the patient, and an abutment part, which extends through the gum and into the oral cavity of the patient. The abutment part provides a core support for the final prosthesis such as a crown, bridge, full denture, or the like. The anchoring part and abutment part can be provided as a single, unitary piece but are more commonly provided as separate components, to be connected together via screwing, bonding, compression fit etc. Such implant systems may be referred to as "two-part" or "two-piece" implants, with the anchoring part commonly being referred to in isolation as "implant" or "fixture" and the abutment part as "abutment" or "post".

The term "abutment" or "base" as used herein can relate to a substructure or intermediate structure to be integrated to the dental restoration for being mounted to the dental implant. The abutment or base can be adapted to align and hold the restoration.

The abutment assembly according to the invention comprises a post body, a screw arrangement and a coupling sleeve advantageously being a single piece different from the post body. The post body has an apical aperture, an occlusal aperture and an axial passage extending between the apical aperture and the occlusal aperture. Advantageously, the axial passage is straight or has a straight axis extending from the apical aperture to the occlusal aperture.

The terms "occlusal" and "apical" as used herein relate to directions in an intended use or application of the abutment assembly. The abutment assembly directly or indirectly connects the dental restoration to the dental implant set into a patient's jawbone. Thereby, apical is the direction towards the implant or jaw bone and occlusal is the opposite direction usually towards the mouth cavity. Even though these two terms literally relate to directions, they are also used for describing locations of portions of the abutment arrangement or the dental restoration such as a section near to the occlusal or apical end, or relations between portions of the abutment assembly or the dental restoration such as portions being closer to the occlusal or apical end relative to other portions.

The term "axial" as used herein can relate to an axis of the abutment assembly or of parts thereof. Thereby, the axis of the screw arrangement or any component thereof can be identical to the axis of the post body when the screw arrangement or component, respectively, is arranged in the post body as intended. This axis can essentially correspond to an axis of the tooth to be replaced or fixed. When being used in the mouth, the axial passage can, thus, extend from an occlusal surface of the restoration to the dental implant.

The screw arrangement has an occlusal head portion and an apical fastening thread portion. As described in more detail below, the screw arrangement may consist of one single element or multiple elements. The screw arrangements or its elements is/are advantageously longitudinal and has/have an axis along which the occlusal head portion and the apical fastening thread portion are offset from each other. The axis is typically straight. Typically, the occlusal head portion is near an occlusal end of the screw arrangement and the fastening thread section is near an apical end of the screw arrangement.

The screw arrangement may be designed to be arranged in the axial passage of the post body so that the screw arrangement extends through or out of the apical aperture of the post body whereby the fastening thread portion of the screw arrangement is at least partially positioned outside the post body. Thereby, the screw arrangement can be designed to be appropriately arranged inside the passage by being dimensioned, shaped and configured to allow correct and mated positioning inside the passage.

The coupling sleeve has an apical opening, an occlusal opening, an axial bore extending between the apical aperture and the occlusal aperture, and a clip structure configured to elastically deform from a liaising position to an intermediate position. In particular, the clip structure is advantageously configured for a snap-fit connection between the coupling sleeve and the dental restoration.

The term "elastic" or "elasticity", as used herein, relates to the ability of a body or material to return to its original size and/or shape after being deformed from its original size and/or shape by a force or influence and after that force or influence is removed. Typically, solid objects generally deform when adequate loads or forces are applied to them. If the material is elastic, the object will return to its initial shape and size after removal of said loads or forces. This is in contrast to plasticity, in which the object fails to do so and instead remains in its deformed state.

For providing appropriate elasticity, the coupling sleeve may be manufactured from an appropriate biocompatible durable material. Advantageously, the material is Nylon, PEEK or a combination thereof, or more particularly titanium. The acronym PEEK relates to polyether ether ketone which is an organic thermoplastic polymer of the polyaryletherketone (PAEK) family frequently used in engineering applications. Beyond others, PEEK has a comparable good biocompatibility, can have a white color similar to teeth, is comparably rigid and still has a comparably high flexibility allowing for a good elastic deformation. The acronym PMMA relates to Poly(methyl methacrylate) which is also known as acrylic or acrylic glass.

The term "snap-fit" as used herein, which can also be denoted as snap-fastening, relates to an engagement between the coupling sleeve and the dental restoration by snapping or clipping the two pieces into each other. Like this, a push-button like connection can be achieved. In particular, the clip structure can be configured to be in the liaising position when no force or influence acts on the post body. While connecting to the dental restoration, the clip structure can be forced or compressed by a force or influence to the intermediate position and then move back towards its original shape in the liaising position when being at the final connection location and after the force or influence is removed. In this position a positive locking or form locking can be established between coupling sleeve and dental restoration. Like this, a conveniently applicable and safe snap-fit or clipping connection can be provided.

The clip structure of the coupling sleeve may have an inner face radially limiting the axial bore. Advantageously, in the liaising position the clip structure has a larger outer circumference than in the intermediate position. The term "outer circumference" as used in this connection can relate to a radial extension of the outer surface of the coupling sleeve and particularly its clipping structure. Thereby, the outer circumference can be defined by a closed or continuous outer surface or outer boundary of the coupling sleeve or by an intermitted surface or a plurality of surface pieces. Also, the outer circumference can define an outer diameter, which can be the largest diameter of a cross section of the coupling sleeve and, more particularly, of all cross sections perpendicular to the axis of the coupling sleeve. The outer circumference can be defined by the coupling sleeve having a closed outer surface or outer boundary, or by a projection tightly surrounding the intermitted outer surface of the coupling sleeve or its clip structure. The outer diameter of the outer circumference in the liaising position may exceed the outer diameter in the intermediate position.

In the liaising position, the clip structure is advantageously connected to the dental restoration when the coupling sleeve is positioned in a corresponding cavity of the dental restoration. Thereby, the liaising position is a position in which the clip structure is when no force acts on the clip structure. In particular, the clip structure is in the liaising position when the coupling sleeve is not deformed, i.e., in its original shape. In the liaising position the clip structure is typically more expanded than in the intermediate position. In the intermediate position, the coupling sleeve can be inserted into or removed from the dental restoration. Typically, in this position, a force or influence acts on the clip structure such that it is temporarily elastically deformed. For example, when being introduced into a cavity of the dental restoration, a wall or a boundary of the cavity may force the clip structure into the intermediate position by pushing the clip structure towards the axis. The intermediate position may also be referred to as a loose position or the like.

Besides flexible sections such as the clip structure, the coupling sleeve advantageously also has sections where it is not flexible, i.e., its outer diameter cannot be changed. In particular, such non-flexible sections can be axially offset from the flexible sections. As described in more detail below, such non-flexible sections can be formed by a frame portion. However, the flexibility of the clip structure has to be appropriate to establish a connection between the coupling sleeve and the dental restoration. A minor flexibility which, e.g., may be intrinsically given within any material if a sufficient force is applied does not qualify as flexible in the sense of the invention as long as it is not appropriate to connect or clip the dental restoration to the coupling sleeve.

The axial bore of the coupling sleeve is equipped with a head socket section configured to receive the occlusal head portion of the screw arrangement. The coupling sleeve is configured such that the clip structure is locked in the liaising position when the occlusal head portion of the screw arrangement is received in the head socket section of the axial bore of the coupling sleeve. In particular, when the screw arrangement is arranged in the axial bore of the coupling sleeve, the occlusal head portion of the screw arrangement is advantageously positioned adjacent to the clip structure of the coupling sleeve. Like this, an elastic transformation of the clip structure is prevented and, thus, the clip structure of the coupling sleeve is secured in the liaising position.

By providing an abutment arrangement with a coupling sleeve, a secure and efficient cement free connection of the dental restoration to the post body can be achieved. In particular, in contrast to mounting the dental restoration directly to the post body, the coupling sleeve may form an interface structure allowing to take into account the constraints given by the post body and the dental restoration. Like this, a precise and safe connection of the dental restoration to a dental implant via the post body and the coupling sleeve can be achieved with an efficiently manufacturable and applicable system. Thus, when using the abutment assembly, the dental restoration can safely be fixed to the post body without requiring any additional components such as cement or the like. Moreover, the clip structure allows to force the dental restoration towards the post body such that a tight fit is established.

Like this, the abutment assembly according to the invention allows for a precise and safe connection of the dental restoration to the dental implant via its post body, its screw arrangement and, specifically, its coupling sleeve. Also, such abutment assembly can be efficiently manufactured since production tolerances are less important.

Advantageously, the post body or abutment is a single piece device which can be made of one single material or one single composition of materials. Such single piece or monolithic post body can be made of titanium or the like in order to suit to the material of the implant.

According to the invention, the clip structure of the coupling sleeve is configured to be elastically deformed towards the axial bore in the intermediate position. Thereby, being deformed towards the axial bore is a deformation into the direction of an axis which may cause the clip structure to be located at least partially in the axial bore. By such elastic deformation it is achieved that the clip structure is temporarily deformed into the intermediate position. In particular, in the intermediate position the coupling sleeve can be thinner, i.e. having a reduced outer diameter or circumference, such that it fit through a comparably tight cavity or a section thereof. For example, when inserting the coupling sleeve into a cavity of the dental restoration, the clip structure can be forced or deformed into the intermediate position and, when being correctly positioned inside the cavity, the clip structure can automatically move to the liaising position. In this manner a snap-fit connection can be established.

In a preferred embodiment, the head socket section of the axial bore of the coupling sleeve has an inner coupling thread and the occlusal head portion of the screw arrangement has an outer coupling thread corresponding to the inner coupling thread of the axial bore of the coupling sleeve. The term "inner thread" can relate to a female thread and, accordingly, the term "outer thread" can relate to a male thread. The term "corresponding" as used in connection with inner and outer threads can relate to a shape of the inner and outer thread allowing to screw the outer thread into the inner thread. In particular, outer and inner threads can correspond by having similar, essentially identical or at least compatible thread properties such as lead angles, helix angles, pitches and the like. Such inner and outer thread allow for precisely positioning the screw arrangement in the coupling sleeve as well as, more particularly, to safely locking the clip structure in the liaising position and the coupling sleeve on the screw arrangement. Furthermore, when the coupling sleeve is coupled to the dental restoration said inner and outer thread configuration forces the dental restoration towards the post body at the same time as locking the clip structure in the liaising position. Thereby, the dental restoration can be pressed onto the post body such that a safe and solid fixation is established. Advantageously, the inner coupling thread extends along the more or less complete axial bore of the coupling sleeve.

Thereby, the screw arrangement and the coupling sleeve are preferably configured to screw the screw arrangement through the apical opening into the head socket section of the axial bore of the coupling sleeve such that the inner coupling thread of the head socket section of the axial bore of the coupling sleeve and the outer coupling thread of the occlusal head portion of the screw arrangement inter-engage when the head socket section of the axial bore of the coupling sleeve receives the occlusal head portion of the screw arrangement. Like this, the clip structure can efficiently be locked in the liaising position. Furthermore, via the coupling sleeve arranged in the dental restoration, the dental restoration can efficiently be moved towards the post body such that it is pressed and fixed to the post body.

Preferably, the outer coupling thread of the occlusal head portion of the screw arrangement is configured to convert a rotational movement of about 360° into an axial movement of a first distance, the apical fastening thread portion has a fastening thread being configured to convert a rotational movement of about 360° into an axial movement of a second distance, and the first distance is smaller than the second distance. The extent of rotational movement of 360° is exemplarily or arbitrary, and can also be any other value of rotation. It is used herein mainly to interrelate rotational and axial movements of threads in order to compare different threads or properties thereof.

In connection with the threads described herein, the term "lead angle" relates to the angle between the thread or, more specifically a helix thereof, and a line perpendicular to the axis around which the thread extends. The complement angle to the lead angle is a helix angle, which is the angle between the helix or thread and the axis or axial line. The helix angle references the axis of the cylinder or cone of the thread, distinguishing it from the lead angle, which references a line perpendicular to the axis. The term "pitch" relates to a distance between axially neighbouring ridges of the respective thread.

In general, for configuring a thread to achieve appropriate properties and particular to achieve a suitable axial movement by a given rotational movement,
properties of the thread can be adjusted. In particular, for that purpose a pitch, a lead angle and/or a helix angle of the thread can be adapted. For example, when the lead angle is predefined or standardized, the pitch can be adapted for adjusting the advancement at a given rotation. More specifically, at a given rotational movement, e.g., at 360°, the axial movement can be reduced by reducing the pitch of the thread. Similarly, when the pitch is predefined or standardized, the lead angle can be adapted for adjusting the advancement at a given rotation. More specifically, at a given rotational movement, e.g., at 360°, the axial movement can be reduced by reducing the lead angle of the thread. Combinations of adapting the pitch and the lead or helix angle are possible as well.

By the first distance being smaller than the second distance, with the same amount of rotation, such as 360°, the outer coupling thread induces less axial movement than the fastening thread. Like this, a higher force can be provided by means of the coupling thread such that a comparably strong fixation of the coupling sleeve or dental restoration to the post body can be achieved.

For example, such screw arrangement may be embodied as a differential pitch screw, wherein the apical thread of which is adapted to fasten to the internal screw thread of the dental implant and the coronal thread of which is adapted to fasten to the internal thread of the coupling sleeve. The diameter of the coronal thread may be such that the differential pitch screw can be fastened to the sleeve without radial displacement of the clipping structure.

The screw threads of the differential pitch screw therefore may engage with both the dental implant and the coupling sleeve. As the screw is fastened to the implant, the sleeve is drawn downwards. The clipping structure of the sleeve may be prevented from bending radially inwards due to the differential pitch screw being within the sleeve. Consequently, the clipping structure or flexible arms thereof remain engaged with an undercut of the cavity and thus the prosthesis, and also the abutment are drawn downwards into closer engagement with the implant. The use of the flexible coupling sleeve may prevent the need to create screw threads in the prosthesis, which is undesirable as the material used for the prosthesis, such as ceramic, is often brittle. The screw may be embodied not to move the clipping structure by only tightening the system.

In another preferred embodiment, the head socket section of the axial bore of the coupling sleeve has a conical seat tapering towards the apical opening of the coupling sleeve and the occlusal head portion of the screw arrangement has a cone section corresponding to the conical seat of the axial bore of the coupling sleeve. Such arrangement allows the screw arrangement to apply a pressure onto the coupling sleeve. Like this, the coupling sleeve together with the dental restoration in which it is arranged can be forced towards the implant and, thereby, fixed to the post body.

Preferably, the coupling sleeve comprises an essentially rigid frame portion and the clip structure of the coupling sleeve has a clipping arm extending from the frame portion of the coupling sleeve. The frame portion may essentially be rigid by being rigid in relation to the clip structure. In particular, the frame portion may be rigid enough to keep its shape when a force or influence is applied to the clip structure deforming the clip structure from the liaising position into the intermediate position. Combined with the frame portion, the clip structure my have any suitable configuration. However, embodying the clip structure with the clipping arm allows for efficiently implementing the clip structure and, particularly, its elastic transformability. Moreover, the clipping arm allows to adjust an appropriate elasticity such that an efficient transformation of the clip structure into the intermediate position and back into the liaising position can be achieved. For achieving a balanced clipping, the clip structure may have two more clipping arms. In particular, the two or more clipping arms can be regularly distributed around the coupling sleeve.

Advantageously, the coupling sleeve is a single piece or monolithic construction which may be made of a single material such as, e.g., PEEK. Furthermore, in an advantageous embodiment the coupling sleeve has an overall cylindrical basic shape wherein the frame portion as well as the clipping are embodied in or at the cylinder.

The frame portion of the coupling sleeve preferably has a lateral window into which the clipping arm of the clip structure of the coupling sleeve extends. In particular, the window can be implemented in a lateral surface of the cylindric or similar coupling sleeve.

The term "lateral" or "radial" as used herein can relate to a direction essentially perpendicular to an occlusal, apical or axial direction, or to an axis extending between an occlusal end and an apical end of the abutment assembly.

The frame portion can have an occlusal ring section, an apical ring section and an axial pillar section connecting the occlusal ring section and the apical ring section.

Thereby, the occlusal and apical ring sections can form the occlusal and apical openings of the coupling sleeve.

Preferably, the clipping arm is elastically deformable towards an axis of the coupling sleeve. Like this, an efficient temporary reduction of the outer circumference of the coupling sleeve can be achieved which allows an appropriate clipping to achieve a snap-fit connection. Moreover, the clipping arm can be formed and dimensioned to define the force required for deforming the clipping structure.

Preferably, the clip structure of the coupling sleeve has a bulge forming a laterally outermost section of the coupling sleeve in the liaising position. For example, the bulge can be embodied at the clipping arm of the clip structure. The term "outermost section" may particularly relate to an extension in a lateral or radial direction of the coupling sleeve. The bulge allows for efficiently providing a well definable outer circumference of the coupling sleeve. Particularly, it allows an adjustable circumference or outer diameter of the coupling sleeve such that the clip structure can efficiently be changed from the liaising position to the intermediate position and/or vice versa.

In a preferred embodiment, the screw arrangement has a single piece screw member equipped with the occlusal head portion and the apical fastening thread portion. Such single piece set up of the screw arrangement allows to fix the dental restoration with the coupling sleeve to the post body and to fasten the post body to the dental implant in one operational step. This allows for an efficient handling or application of the abutment assembly.

Thereby, the single piece screw member preferably comprises a radially extending collar section. Such collar section may act as a limit stop and may prevent the screw member from being inserted too far into the coupling sleeve. In this way the screw member may be prevented from damaging the prosthesis and may assure an accurate positioning. In addition, it may provide additional support to the structure under stress conditions (e.g. non-axial forces being applied to the structure).

In another preferred embodiment, the screw arrangement comprises a coupling screw and a fastening screw, wherein the occlusal head portion is incorporated into the coupling screw and the apical fastening thread portion is incorporated into the fastening screw. Such two or more pieces construction allows to efficiently fix the dental restoration together with the coupling sleeve to the post body and to fasten the post body to the dental implant. Like this, a particularly sophisticated way of fixing the dental restoration to the post body can be embodied independent from the fasting to the dental implant.

Thereby, the axial passage of the post body preferably has an inner sleeve thread and the coupling screw of the screw arrangement preferably has an apical outer body thread corresponding to the inner sleeve thread of the axial passage of the post body. Such inner and outer sleeve threads allow to securely fix the coupling sleeve to the dental restoration to the post body by means of the screw arrangement.

Moreover, the apical outer body thread of the coupling screw of the screw arrangement is preferably configured to convert a rotational movement of about 360° into an axial movement of a third distance and the first distance preferably is smaller than the third distance. By having a smaller first distance at the occlusal head portion of the coupling screw, a comparably large force can be applied for connecting the dental restoration to the post body. In particular, an axial movement induced by an identical extent of rotation is smaller at the occlusal head portion than at the apical outer body thread. This also allows to move the coupling sleeve together with the dental restoration towards the post body and, thereby, to press the dental restoration to the post body. Like this, a specifically solid fixation of the dental restoration to the post body can be achieved.

Thereby, the third distance preferably is essentially identical to the second distance. Having identical distances at the apical outer body thread of the coupling screw and the fastening thread of the fastening screw allows for an efficient implementation and application of the abutment assembly.

Preferably, the axial passage of the post body has an inner implant thread and the fastening screw of the screw arrangement has an occlusal outer body thread corresponding to the inner body thread of the axial passage of the post body. Such an inner implant thread and an occlusal outer body thread allow for securely fastening the post body to the dental implant by means of the screw arrangement.

Moreover, the occlusal outer body thread of the fastening screw of the screw arrangement preferably is configured to convert a rotational movement of about 360° into an axial movement of a fourth distance and the fourth distance is smaller than the second distance. By having a smaller distance at the occlusal outer body thread of the fastening screw, a comparably large force can be applied for connecting the post body to the dental implant. In particular, an axial movement induced by an identical extent of rotation is smaller at the occlusal outer body thread than at the apical fastening thread portion. This also allows to move the post body towards the dental implant and, thereby, to press the post body to the dental implant or a specific socket thereof. Like this, a specifically solid fastening of the post body to the dental implant can be achieved.

Thereby, the fourth distance is preferably essentially identical to the first distance. Having identical distances at the occlusal outer body thread of the fastening screw and the occlusal head portion of the coupling screw allows for an efficient implementation and application of the abutment assembly.

Preferably, the abutment assembly comprises a dental implant with a socket configured to receive the apical fastening thread portion of the screw arrangement. For receiving the apical fastening thread section, the socket can be equipped with an inner fastening thread corresponding to the fastening thread of the apical fastening thread. By providing the dental implant in the abutment assembly a specifically adapted configuration of the involved components can be achieved. In particular, the dental implant can be adapted to particularly suit to other components of the abutment assembly and the dental restoration. This provides an exactly adjusted system.

Thereby, preferably the post body has a cone portion and the socket of the dental implant has a conical entry section configured to abut the cone portion of the post body. In particular, the abutment assembly can be configured such that the post body is fixed to the dental implant by means of the screw arrangement, wherein the cone portion is pressed onto the conical entry section when the apical fastening portion of the screw arrangement is received into the socket.

Preferably, the abutment assembly comprises a dental restoration having a cavity configured to receive the clipping structure of the coupling sleeve in order to connect the coupling sleeve to the dental implant.

The cavity of the dental restoration can particularly be a through bore allowing to access the screw arrangement through the dental restoration or to provide the screw arrangement into or through the post body while the dental restoration is arranged on the post body. In particular, the through bore can have an axis which is identical to the axis of the abutment assembly when the dental restoration is arranged on the post body as intended. In a sophisticated manner the dental restoration can be manufactured in a CAD/CAM process. Alternatively, it can be manufactured in a pressing process or a molding process or a combination thereof.

The through bore or cavity can be formed or shaped to specifically suit or correspond to the coupling sleeve. Preferably, the cavity of the dental restoration comprises a stem section and a cave section radially protruding the stem section. Such a shape of the cavity can be particularly suitable for a snap-fit connection with the post body.

The cave section can be shaped as a concave impression into which the clip structure of the coupling sleeve can be located when being in its liaising position such that moving the dental restoration in relation to the post body is prevented. The impression can be embodied as an increase of the axial cross section of the cavity. It can extend around the complete circumference of the post body or at sections of the circumference only where expandable sections of the clip structure such as the clipping arm are located. Such a concave impression provides a safe connection between the coupling sleeve and the dental restoration. The stem section can be essentially cylindrical or the like.

Thereby, for establishing a secure snap-fit or push-button connection, the cavity of the dental restoration and the mounting portion of the post body are preferably arranged such that: (i) the clip structure of the coupling sleeve or a bulge thereof can pass through the stem section of the cavity of the dental restoration, when the clip structure of the coupling sleeve is in the intermediate position, and (ii) the clip structure of the coupling sleeve or a bulge thereof cannot pass through the stem section of the cavity of the dental restoration when the clip structure of the coupling sleeve is in the liaising position. Like this, an efficient clipping can be embodied which allows a snap-fit connection.

Preferably, at least a portion of the cave section of the cavity of the dental restoration has an inner shape corresponding to an outer shape of the clip structure of the coupling sleeve, and the inner shape of the cave section of the cavity of the dental restoration is smaller than the outer shape of the clip structure of the coupling sleeve. The term "inner shape" and "outer shape" in this connection can relate to an inner or outer periphery. The dimensions of the inner and outer shapes can particularly be defined by the inner and outer radial diameters of the cavity and the coupling sleeve, respectively. Thus, the inner shape of the cave section of the cavity of the dental restoration can be smaller than the outer shape of the clip structure of the coupling sleeve by the cave section having smaller inner radial diameters than the outer diameters of the clip structure. Such dimensions of the cave section of the cavity and the coupling sleeve ensure that the clip structure abuts the cave section when the coupling sleeve is arranged in the cavity of the dental restoration. A lateral or radial gap between the cave section and the clip structure can be prevented such that a clearance between the post body and the dental restoration is also prevented. Like this, a safe and firm connection between the post body and the dental restoration can be achieved via the coupling sleeve.

The term "smaller" as used in this connection can relate to a comparably slight difference. However, the difference should still be bigger than the production tolerances of the dental restoration and the post body. Like this, the effect of the production tolerances can be eliminated and a secure contact between the cave section and the bulge section can be achieved.

Preferably, the dental restoration has an abutting section and the post body has a corresponding shoulder portion configured to abut the abutting section of the dental restoration. Advantageously, in a flange-like manner, the shoulder portion laterally extends from the post body in an essentially radial direction. Like this, an appropriate contacting surface can be provided for receiving the dental implant such that the dental implant can be pressed onto the post body. In particular, the dental restoration can be pressed to the post body by means of the screw arrangement and the coupling sleeve. Furthermore, the shoulder allows for distributing the forces such as biting or chewing forces over a larger area which can reduce the wear of the post body and increase stability of the system.

In another aspect, not part of the claimed invention, this disclosure relates to a method of connecting a dental restoration to a dental implant. The method comprises the steps of: obtaining an abutment assembly as described herein above; inserting the coupling sleeve into the cavity of the dental restoration such that the clip structure of the coupling sleeve is located in the cave section of the cavity of the dental restoration in the liaising position; screwing the occlusal head portion of the screw arrangement through the apical opening of the coupling sleeve thereby locking the clip structure of the coupling sleeve in the liaising position; arranging the dental restoration together with the coupling sleeve on the post body; and screwing the apical fastening thread portion of the screw arrangement into the socket of the dental implant such that the dental restoration together with the coupling sleeve and the post body is fixed to the dental implant.

Such a method allows to efficiently connect a dental restoration to a dental implant without requiring using any cement. In particular, the method allows to efficiently achieve the effects and advantages described above in connection with the abutment assembly according to the invention and its preferred embodiments.

### Brief Description of the Drawings

The abutment assembly according to the invention and the method, not part of the claimed invention, are described in more detail herein below by way of exemplary embodiments and with reference to the attached drawings, in which:
Fig. 1 shows an exploded side view of a first embodiment of an abutment assembly according to the invention;
Fig. 2 shows an exploded cross-sectional side view of the abutment assembly of Fig. 1 ; Fig. 3 shows a cross-sectional side view of a fastening screw and a post body of the abutment assembly of Fig. 1 in a first step of a first embodiment of a method according to the disclosure;
Fig. 4 shows a cross-sectional side view of the fastening screw, the post body and a dental implant of the abutment assembly of Fig. 1 in a second step of the method of Fig. 3;
Fig. 5 shows a cross-sectional side view of a dental crown and a coupling sleeve of the abutment assembly of Fig. 1 in a third step of the method of Fig. 3;
Fig. 6 shows a cross-sectional side view of the dental crown and the coupling sleeve of the abutment assembly of Fig. 1 in a fourth step of the method of Fig. 3;
Fig. 7 shows a cross-sectional side view of the dental crown, the coupling sleeve and a coupling screw of the abutment assembly of Fig. 1 in a fifth step of the method of Fig. 3;
Fig. 8 shows a cross-sectional side view of the abutment assembly of Fig. 1 in a sixth step of the method of Fig. 3;
Fig. 9 shows a cross-sectional side view of the abutment assembly of Fig. 1 in a seventh step of the method of Fig. 3;
Fig. 10 shows an exploded side view of a second embodiment of an abutment assembly according to the invention;
Fig. 11 shows an exploded cross-sectional side view of the abutment assembly of Fig. 10;
Fig. 12 shows a cross-sectional side view of a screw, a dental crown and a coupling sleeve of the abutment assembly of Fig. 10 in a step of a second embodiment of a method according to the disclosure;
Fig. 13 shows a cross-sectional side view of the abutment assembly of Fig. 10 in another step of the method of Fig. 12;
Fig. 14 shows an exploded side view of a third embodiment of an abutment assembly according to the invention;
Fig. 15 shows an exploded cross-sectional side view of the abutment assembly of Fig. 14;
Fig. 16 shows a detail of Fig. 12 a cross-sectional side view of the abutment assembly of Fig. 14 after being processed in a third embodiment of a method according to the disclosure;
Fig. 17 shows an exploded side view of a fourth embodiment of an abutment assembly according to the invention;
Fig. 18 shows an exploded cross-sectional side view of the abutment assembly of Fig. 17;
Fig. 19 shows a cross sectional side view of a coupling sleeve and a dental crown of the abutment assembly of Fig. 17, while the coupling sleeve is connected to the dental crown;
Fig. 20 shows a cross sectional side view of the coupling sleeve and the dental crown of the abutment assembly of Fig. 17, after the coupling sleeve is connected to the dental crown;
Fig. 21 shows a cross sectional side view of the coupling sleeve, the dental crown and a screw member of the abutment assembly of Fig. 17, wherein the screw member is screwed into the coupling sleeve;
Fig. 22 shows a cross sectional side view of a post body and a dental implant of the abutment assembly of Fig. 17, wherein the post body is set into the dental implant;
Fig. 23 shows a cross-sectional side view of the abutment assembly of Fig. 17, while the dental crown equipped with the coupling sleeve and the screw member is mounted to the dental implant equipped with the post body;
Fig. 24 shows a cross-sectional side view of the abutment assembly of Fig. 17, after the dental crown equipped with the coupling sleeve and the screw member is mounted to the dental implant equipped with the post body.

### Description of Embodiments

In the following description certain terms are used for reasons of convenience and are not intended to limit the invention. The terms "right", "left", "up", "down", "under" and "above" refer to directions in the figures. The terminology comprises the explicitly mentioned terms as well as their derivations and terms with a similar meaning. Also, spatially relative terms, such as "beneath", "below", "lower", "above", "upper", "proximal", "distal", and the like, may be used to describe one element's or feature's relationship to another element or feature as illustrated in the figures. These spatially relative terms are intended to encompass different positions and orientations of the devices in use or operation in addition to the position and orientation shown in the figures. For example, if a device in the figures is turned over, elements described as "below" or "beneath" other elements or features would then be "above" or "over" the other elements or features. Thus, the exemplary term "below" can encompass both positions and orientations of above and below. The devices may be otherwise oriented (rotated 90 degrees or at other orientations), and the spatially relative descriptors used herein interpreted accordingly. Likewise, descriptions of movement along and around various axes include various special device positions and orientations.

To avoid repetition in the figures and the descriptions of the various aspects and illustrative embodiments, it should be understood that many features are common to many aspects and embodiments. Omission of an aspect from a description or figure does not imply that the aspect is missing from embodiments that incorporate that aspect. Instead, the aspect may have been omitted for clarity and to avoid prolix description. In this context, the following applies to the rest of this description: If, in order to clarify the drawings, a figure contains reference signs which are not explained in the directly associated part of the description, then it is referred to previous or following description sections. Further, for reason of lucidity, if in a drawing not all features of a part are provided with reference signs it is referred to other drawings showing the same part. Like numbers in two or more figures represent the same or similar elements.

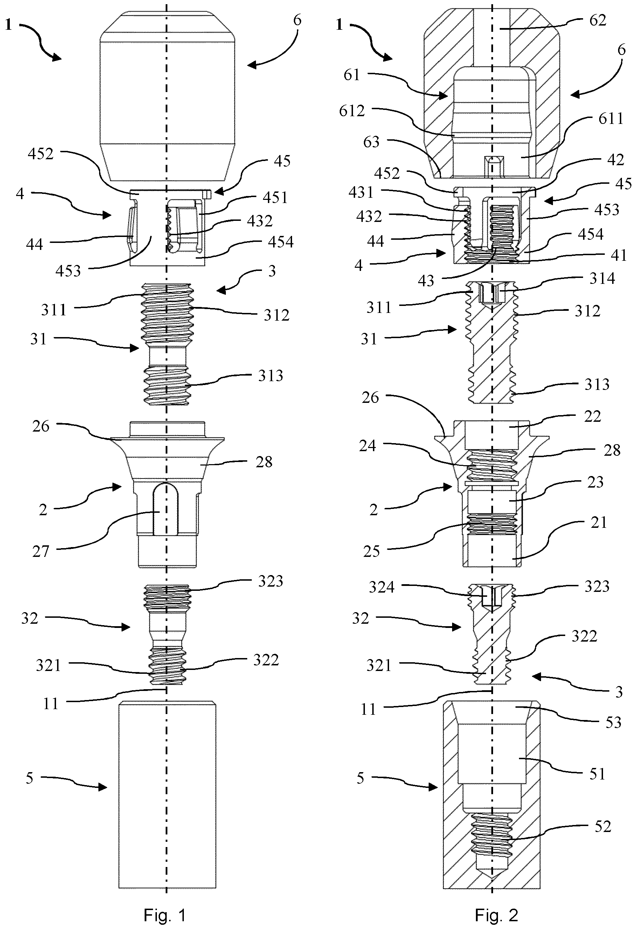

Fig. 1 shows a first embodiment of an abutment assembly 1 according to the invention. The abutment assembly 1 comprises a dental crown 6 as dental restoration, a coupling sleeve 4, a screw arrangement 3 consisting of a coupling screw 31 and a fastening screw 32, a post body 2 and a dental implant 5. The abutment assembly 1 has a central axis 11 along which the components of the abutment assembly 1 are positioned in Fig. 1.

The dental crown 6 is made of a ceramic material shaped to replace a natural tooth of a patient. The coupling sleeve 4 is made of titanium. It has a rigid frame portion 45 with an occlusal ring section 452, an apical ring section 454 and three axial pillar sections 453 connecting the occlusal ring section 452 and the apical ring section 454. In between the axial pillar sections 453 three lateral windows 451 are formed. The coupling sleeve 45 further has a clip structure with three clipping arms 44. Each of the clipping arms 44 extends from the occlusal ring section 452 of the frame portion 45 towards the apical ring section 454 into one of the lateral windows 451. Near their free bottom ends, each of the clipping arms 44 is equipped with a bulge outwardly of laterally projecting.

The clipping arms 44 are elastically transformable or bendable towards an interior of the coupling sleeve 4 through the respective lateral windows 451. In an initial or non-transformed state, the clipping arms 44 are in a liaising position. When being elastically bent or transformed towards the interior of the coupling sleeve 4, the clipping arms 44 are in an intermediate position. In the liaising position, the outer ends of the clipping arms 44 are the laterally outermost sections of the coupling sleeve 4. In other words, in the liaising position, the bulges of the clipping arms 44 define the largest circumference or diameter of the coupling sleeve 4.

The coupling screw 31 comprises an occlusal head portion 311 with an outer coupling thread 312 and an apical outer body thread 313. The fastening screw 32 has an occlusal outer body thread 323 and an apical fastening thread portion 321 with a fastening thread 322. The outer coupling thread 312 is configured to convert a rotational movement of about 360° into an axial movement of a first distance, the fastening thread 322 is configured to convert a rotational movement of about 360° into an axial movement of a second distance, the outer body thread 313 is configured to convert a rotational movement of about 360° into an axial movement of a third distance, and the occlusal outer body thread 323 is configured to convert a rotational movement of about 360° into an axial movement of a fourth distance. More specifically, the four threads are configured to achieve the four respective distances by, beyond others, appropriately adapting the pitches. Thereby, it achieves that the first and fourth distances are smaller than the second and third distances.

The post body 2 is made of titanium and has a flange-like shoulder portion 26 near the top or occlusal end. Adjacent to the shoulder portion 26, the post body 2 has a downwardly tapering cone portion 28. Further, an outer circumference of the post body 2 is equipped with an axial indexing groove 27.

In Fig. 2, the abutment assembly 1 is depicted in a cross-sectional view. Thereby, it can be seen that the dental crown 6 has a ceramic crown body with a central bore 62, which is open in an upward and a downward direction, forming a cavity 61. The cavity 61 comprises a lower cylindrical stem section 611 and an upper concave cave section 612.

The coupling sleeve 4 has an apical opening 41 at the apical ring section 454 of the frame portion 45, an occlusal opening 42 at the occlusal ring section 452 of the frame portion 45 and a straight axial bore 43 extending between the apical opening 41 and the occlusal opening 42. The axial bore 43 forms a head socket section 431 configured to receive the occlusal head portion 311 of the coupling screw 31. More specifically, the axial bore 43 is equipped with an inner coupling thread 432 corresponding to the outer coupling thread 312 of the coupling screw 31.

At the occlusal head portion 311, the coupling screw 31 is provided with a driver recess 314 for accommodating a screw-driver. Likewise, the fastening screw 32 is provided with a driver recess 324 at its occlusal end to accommodate a screw-driver.

The post body 2 has an apical aperture 21, an occlusal aperture 22 and a straight axial passage 23 extending between the apical aperture 21 and the occlusal aperture 22. Nearby the apical aperture 21, the axial passage 23 is equipped with an inner implant thread 25 corresponding to the occlusal outer body thread 323 of the fastening screw 32. Further, nearby the occlusal aperture 22, the axial passage 23 is equipped with an inner sleeve thread 24 corresponding to the apical outer body thread 313 of the coupling screw 31.

The dental implant 5 has a body socket 51 to accommodate and support the post body 2. At its lower end, the socket 51 is equipped with an inner fixation thread 52 corresponding to the fastening thread 322 of the implant screw 32. Further, the socket 51 has a conical entry section 53 corresponding to the cone portion 28 of the post body 2.

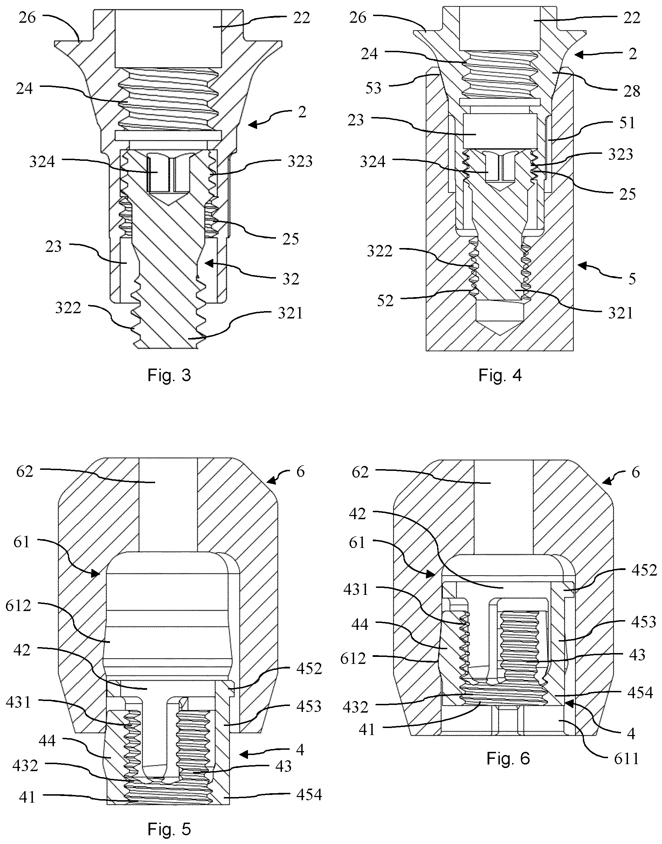

Fig. 3 shows a first step of the first embodiment of a method according to the disclosure to connect the dental crown 6 to the dental implant 5. The first step comprises obtaining the abutment assembly 1 and screwing the fastening screw 32 bottom up into the post body 2. In particular, the fastening screw 32 is screwed into the post body 2 until the occlusal outer body thread 323 of the fastening screw is located above the inner implant thread 25 of the post body 2.

In Fig. 4 a second step of the first method is illustrated. The post body 2 is set top down into the socket 51 of the dental implant 5 such that the cone portion 28 abuts the entry section 53. The fastening screw 32 is screwed into the dental implant 5 to fix the post body 2 to the dental implant 5. In particular, a suitable screw-driver accesses the driver recess 324 of the fastening screw 32 and rotates it about the axis 11. Thereby, the outer fastening thread 322 engages the inner fixation thread 52. At the same time, the occlusal outer body thread 323 of the fastening screw 32 engages the inner implant thread 25 of the post body 2. Since the fourth distance of the occlusal outer body thread 323 or the inner implant thread 25, respectively, is smaller than the second distance of the outer fastening thread 322 or the inner fixation thread 52, respectively, the cone portion 28 of the body portion 2 is pressed onto the conical entry section 53 of the dental implant 5 while fixing the fastening screw 32 to the dental implant 5 with a comparably large force. Like this, a tight and secure connection between the post body 2 and the dental implant is achieved.

Fig. 5 shows a third step of the first method. The coupling sleeve 4 is introduced bottom up into the cavity 61 of the dental crown 6. Thereby, the side walls of the neck section 611 of the cavity 61 inwardly force the clipping arms 44 such that they are elastically transformed into the intermediate position. In Fig. 6 a fourth step of the method is shown in which the coupling sleeve 4 is upwardly inserted into the cavity 61 such that the bulges of the clipping arms 44 are adjacent to the bulge section 612 of the cavity 61. At this location, the clipping arms 44 elastically move back to the liaising position such that they clip in or snap in the bulge section 612. Like this, a snap-fit connection between the coupling sleeve 4 and the dental crown 6 is established.

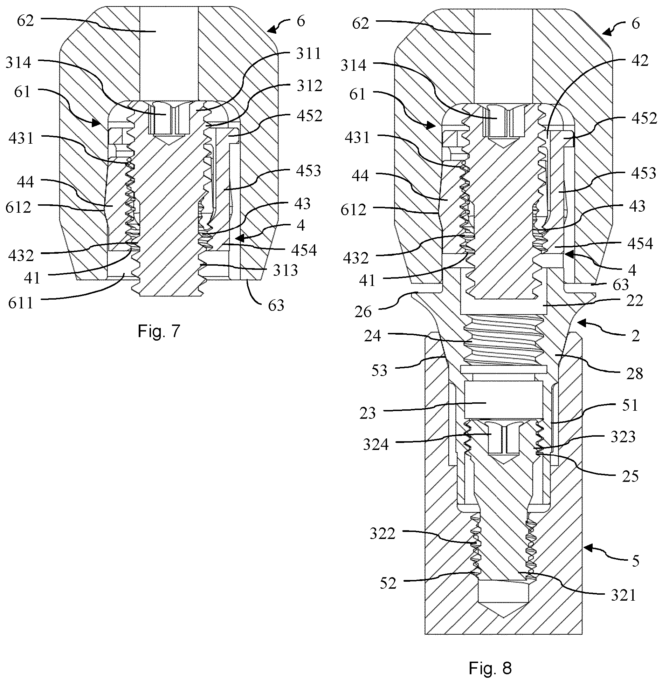

Fig. 7 shows a fifth step of the first method. The coupling screw 31 is screwed bottom up into the coupling sleeve 4 which is inserted into the cavity 61 of the dental crown 6. In particular, the coupling screw 31 is screwed into coupling sleeve 4 until the outer coupling thread 312 of the coupling screw 31 is partially located above the inner coupling thread 432 of the coupling sleeve 4.

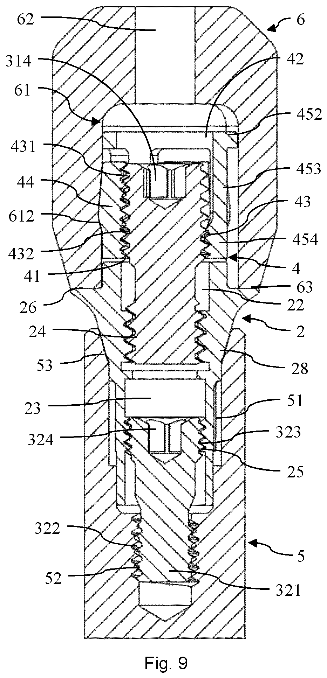

In Fig. 8 a sixth step of the first method is shown in which the dental crown 6 together with the coupling sleeve 4 and the coupling screw 31 is set onto the post body 2 fastened to the dental implant 5 by means of the implant screw 32. Fig. 9 shows a seventh step of the first method. The coupling screw 31 is screwed into the post body 2 to fix the dental crown 6 to the post body 2 and, thereby, to the dental implant 5. In particular, a suitable screw-driver accesses the driver recess 314 of the coupling screw 31 and rotates it about the axis 11. Thereby, the apical outer body thread 313 engages the inner sleeve thread 24. At the same time, the outer coupling thread 312 of the coupling screw 31 engages the inner coupling thread 432 of the coupling sleeve 4. Since first distance of the outer coupling thread 312 or inner coupling thread 432, respectively, is smaller than the third distance of the apical outer body thread 313 or inner sleeve thread 24, respectively, a lower abutting face 63 of the dental crown 6 is pressed onto the shoulder portion 28 of the post body 2 while fixing the coupling screw 31 to the post body 2 with a comparably large force. At the same time, the occlusal head portion 311 of the coupling screw 31 is located adjacent to the clipping arms 44 thereby locking the clipping arms 44 in the liaising position. Like this, a tight and secure connection between the dental crown 6 and the post body 2 is achieved.

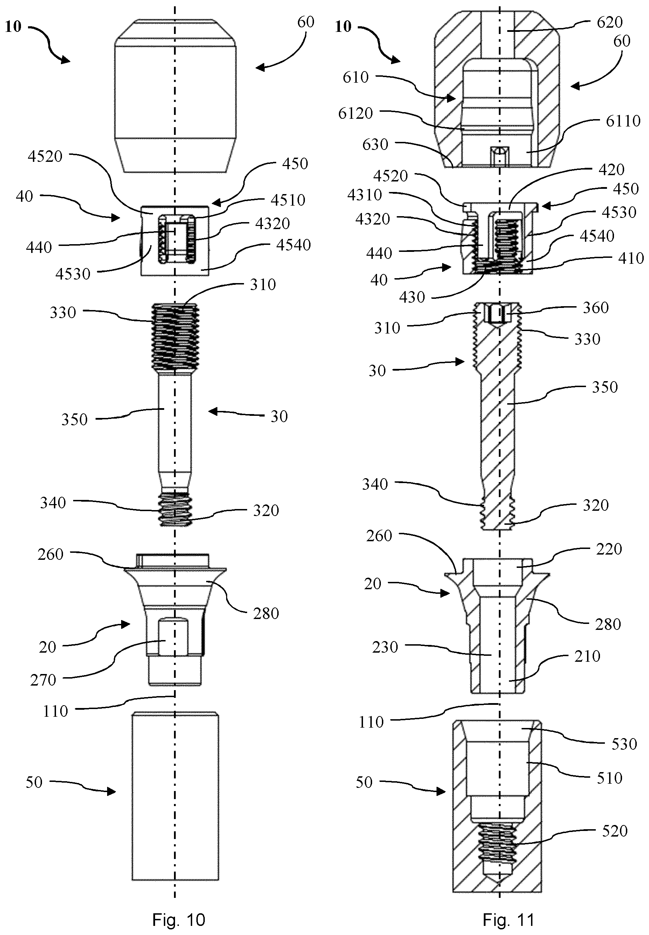

Fig. 10 and Fig. 11 show a second embodiment of an abutment assembly 10 according to the invention having a central axis 110. The abutment assembly 10 comprises a dental crown 60 as a dental restoration, a coupling sleeve 40 and a dental implant 50 similar than the respective components of the first abutment assembly 1 described above. In particular, the dental crown 60 has a ceramic crown body with a central bore 620, which is open in an upward and a downward direction, forming a cavity 610. The cavity 610 comprises a lower cylindrical stem section 6110 and an upper concave cave section 6120.

The coupling sleeve 40 has a rigid frame portion 450 with an occlusal ring section 4520, an apical ring section 4540 and three axial pillar sections 4530 connecting the occlusal ring section 4520 and the apical ring section 4540. In between the axial pillar sections 4530 three lateral windows 4510 are formed. The coupling sleeve 450 further has a clip structure with three clipping arms 440. Each clipping arm 440 extends from the occlusal ring section 4520 of the frame portion 450 towards the apical ring section 4540 into one of the lateral windows 4510. Near their free bottom ends, each of the clipping arms 440 is equipped with a bulge outwardly or laterally projecting.

The clipping arms 440 are elastically transformable or bendable towards an interior of the coupling sleeve 40 through the respective lateral windows 4510. In an initial or non-transform ed state, the clipping arms 440 are in a liaising position. When being elastically bent or transformed towards the interior of the coupling sleeve, the clipping arms 440 are in an intermediate position. In the liaising position, the outer ends of the clipping arms 440 are the laterally outermost sections of the coupling sleeve 40. In other words, in the liaising position, the bulges of the clipping arms 440 define the largest circumference or diameter of the coupling sleeve 40.

Further, the coupling sleeve 40 has an apical opening 410 at the apical ring section 4540 of the frame portion 450, an occlusal opening 420 at the occlusal ring section 4520 of the frame portion 450 and a straight axial bore 430 extending between the apical opening 410 and the occlusal opening 420. The axial bore 430 forms a head socket section 4310. More specifically, the axial bore 430 is equipped with an inner coupling thread 4320.

The abutment assembly 10 further comprises a screw member 30 equipped with an occlusal head portion 310 and an apical fastening thread portion 320 as a single piece screw arrangement. The occlusal head portion 310 is equipped with an outer coupling thread 330 and the apical fastening thread portion 320 is equipped with a fastening thread 340. The outer coupling thread 330 is configured to convert a rotational movement of about 360° into an axial movement of a first distance and the fastening thread 340 is configured to convert a rotational movement of about 360° into an axial movement of a second distance. The first distance is smaller than the second distance. In between the occlusal head portion 310 and the apical fastening thread portion 320 the screw member 30 has a rod portion without an outer thread.

The post body 20 has a flange-like shoulder portion 260 near the top or occlusal end. Adjacent to the shoulder portion 260, the post body 20 has a downwardly tapering cone portion 280. Further, the outer circumference of the post body 20 is equipped with an axial indexing groove 270. Further, the post body 20 has an apical aperture 210, an occlusal aperture 220 and a straight axial passage 230 extending between the apical aperture 210 and the occlusal aperture 220.

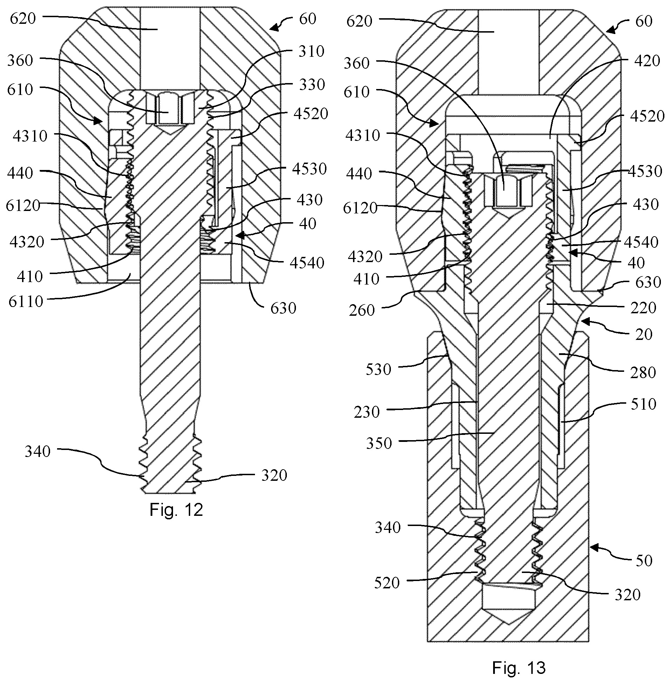

In Fig. 12 a step of the second embodiment of a method according to the disclosure to connect the dental crown 60 to the dental implant 50 is shown. It comprises obtaining the abutment assembly 10 and introducing the coupling sleeve 40 bottom up into the cavity 610 of the dental crown 60. Thereby, the side walls of the neck section 6110 of the cavity 610 inwardly force the clipping arms 440 such that they are elastically transformed into the intermediate position. The bulges of the clipping arms 440 are adjacent to the bulge section 6120 of the cavity 610. At this location, the clipping arms 44 are in the liaising position such that they are clipped in the bulge section 612.

The screw member 30 is screwed bottom up into the coupling sleeve 40. In particular, the screw member 30 is screwed until the outer coupling thread 330 of the screw member 30 is located partially above the inner coupling thread 4320.

Fig. 13 shows another step of the second method. The dental crown 60 together with the coupling sleeve 40 and the screw member 30 is set onto the post body 20 inserted into the socket 510 of the dental implant 50. Thereby, the screw member 30 extends through the axial passage 230 of the post body and the fastening thread 340 engages the corresponding inner fixation thread 520. At the same time, the outer coupling thread 330 engages the inner coupling thread 4320.

Since the first distance of the outer coupling thread 330 or inner coupling thread 4320, respectively, is smaller than the second distance of the fastening thread 340 or inner fixation thread 520, respectively, a lower abutting face 630 of the dental crown 60 is pressed onto the shoulder portion 280 of the post body 20 while fixing the screw member 30 to the post body 20 and the dental implant 50 with a comparably large force. At the same time, the occlusal head portion 310 of the screw member 30 is located adjacent to the clipping arms 440 thereby locking the clipping arms 440 in the liaising position. Like this, a tight and secure connection between the dental crown 60 and the dental implant 50 is achieved via the coupling sleeve 40 and the post body 20.

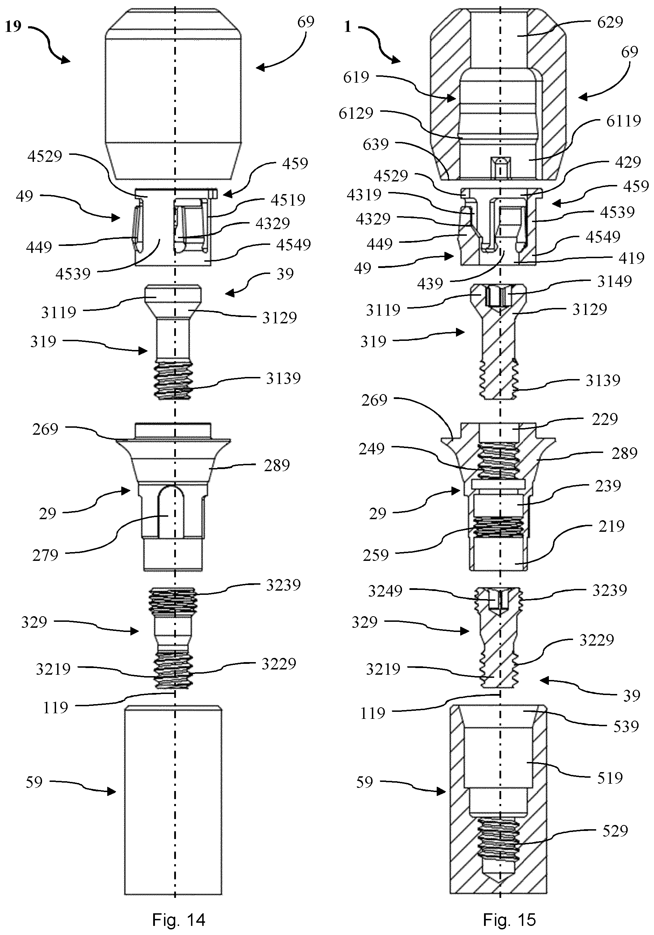

Fig. 14 and Fig. 15 show a third embodiment of an abutment assembly 19 according to the invention having a central axis 119. The abutment assembly 19 comprises a dental crown 69 as dental restoration, a coupling sleeve 49, a dental implant 59 and a screw arrangement with a coupling screw 319 and a fixing screw 329 similar to the respective components of the first abutment assembly 1 described above. In particular, the dental crown 69 has a ceramic crown body with a central bore 629, which is open in an upward and a downward direction, forming a cavity 619. The cavity 619 comprises a lower cylindrical stem section 6119 and an upper concave cave section 6129.

The coupling sleeve 49 has a rigid frame portion 459 with an occlusal ring section 4529, an apical ring section 4549, and three axial pillar sections 4539 connecting the occlusal ring section 4529 and the apical ring section 4549. In between the axial pillar sections 4539 three lateral windows 4519 are formed. The coupling sleeve 459 further has a clip structure with three clipping arms 449. Each clipping arm 449 extends from the occlusal ring section 4529 of the frame portion 459 towards the apical ring section 4549 into one of the lateral windows 4519. Near their free bottom ends, each of the clipping arms 449 is equipped with a bulge outwardly of laterally projecting.

The clipping arms 449 are elastically transformable or bendable towards an interior of the coupling sleeve 49 through the respective lateral windows 4519. In an initial or non-transform ed state, the clipping arms 449 are in a liaising position. When being elastically bent or transformed towards the interior of the coupling sleeve, the clipping arms 449 are in an intermediate position. In the liaising position, the outer ends of the clipping arms 449 are at the laterally outermost sections of the coupling sleeve 49. In other words, in the liaising position, the bulges of the clipping arms 449 define the largest circumference or diameter of the coupling sleeve 49.

The coupling sleeve 49 further has an apical opening 419 at the apical ring section 4549 of the frame portion 459, an occlusal opening 429 at the occlusal ring section 4529 of the frame portion 459 and an axial bore 439 extending between the apical opening 419 and the occlusal opening 429. The axial bore 439 forms a head socket section 4319. The head socket section 4319 has a downwardly tapering cone section 4329.

The coupling screw 319 comprises an apical outer body thread 3139 and an occlusal head portion 3119 with a lower conical abutting section 3129. The fastening screw 329 has an occlusal outer body thread 3239 and an apical fastening thread portion 3219 with a fastening thread 3229. The fastening thread 3229 is configured to convert a rotational movement of about 360° into an axial movement of a second distance, the apical outer body thread 3139 is configured to convert a rotational movement of about 360° into an axial movement of a third distance, and the occlusal outer body thread 3239 is configured to convert a rotational movement of about 360° into an axial movement of a fourth distance. The fourth distance is smaller than the second and third distances.

At an occlusal end, the coupling screw 319 is provided with a driver recess 3149 for accommodating a screw-driver. Likewise, the fastening screw 329 is provided with a driver recess 3249 at its occlusal end to accommodate a screw-driver.

The post body 29 has an apical aperture 219, an occlusal aperture 229 and a straight axial passage 239 extending between the apical aperture 219 and the occlusal aperture 229. Nearby the apical aperture 219, the axial passage 239 is equipped with an inner implant thread 259 corresponding to the occlusal outer body thread 3239 of the fastening screw 329. Further, nearby the occlusal aperture 229, the axial passage 239 is equipped with an inner sleeve thread 249 corresponding to the apical outer body thread 3139 of the coupling screw 319.

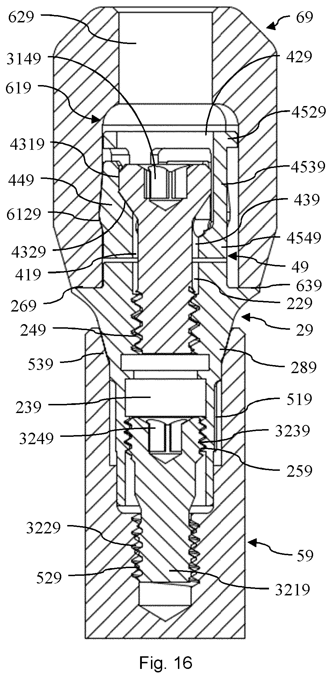

As shown in Fig. 16, after applying a third embodiment of a method according to the disclosure, the post body 29 is fixed to the dental implant 59 as described above in connection with Fig. 3 and Fig. 4 for the first abutment assembly 1. Also clipping the coupling sleeve 49 into the cavity 619 of the dental crown 69 is performed as described above in connection with Fig. 5 and Fig. 6 for the first abutment assembly.

However, the dental crown 69 is fixed to the post body 29 which is fixed to the dental implant 59 by introducing the coupling screw 319 through the central bore 629 of the dental crown 69. For this, the central bore 629 has to be dimensioned comparably large. The coupling screw 319 is arranged through the coupling sleeve 49 and its apical outer body thread 3139 engages the inner sleeve thread 249 of the post body 29. Thereby, the conical abutting section 3129 is pressed onto the cone section 4329 such that the coupling screw 319 is pressed to the coupling sleeve 49. Likewise, a lower abutting face 639 of the dental crown 69 is pressed onto the shoulder portion 269 of the post body 29. At the same time, the occlusal head portion 3119 of the coupling screw 319 locks the clipping arms 449 in the liaising position.

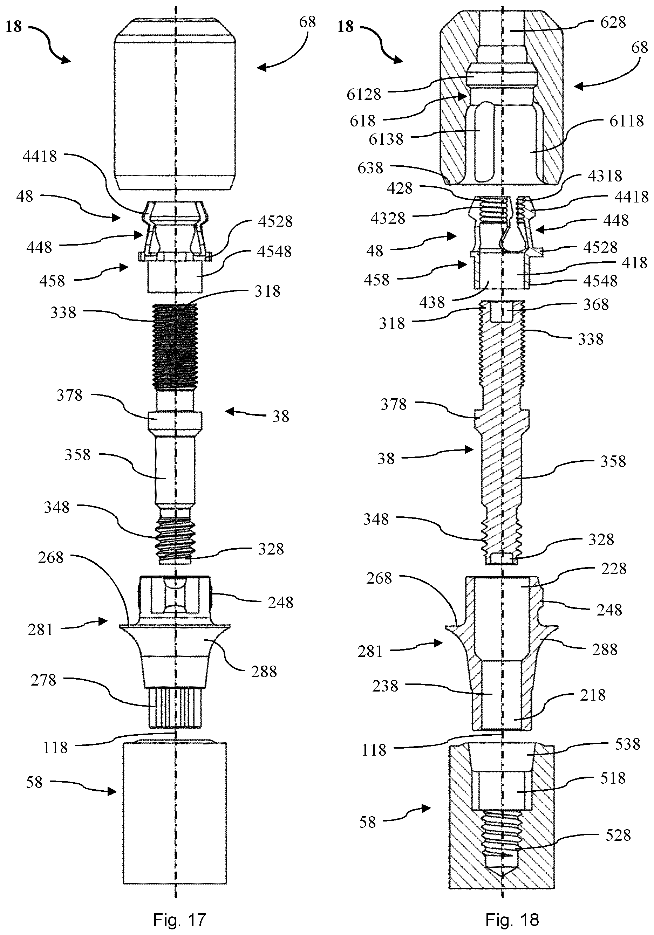

Fig. 17 and Fig. 18 show a fourth embodiment of an abutment assembly 18 according to the invention, having a central axis 118. The abutment assembly 18 comprises a dental crown 68 as dental restoration, a coupling sleeve 48, a screw member 38, a post body 281 and a dental implant 58.

Thereby, the dental crown 68 has a ceramic crown body with a central bore 628, which is open in a coronal upward direction and in an apical downward direction and which forms a cavity 618. The cavity 618 comprises a lower cylindrical stem section 6118 and an upper concave cave section 6128. The stem section 6118 is equipped with axial indexing indentations 6138.

The coupling sleeve 48 has a rigid frame portion 458 with a central ring section 4528 and an apical cylinder section 4548. The ring section 4528 has an asymmetrical outer circumference thereby forming an indexing geometry matching to the stem section 6118 with its indexing indentations 6138 of the cavity 618 of the dental crown 68.

The coupling sleeve 458 further comprises a clip structure with four clipping arms 448 regularly arranged around the central ring section 4528. The clipping arms 448 extend from the central ring section 4528 of the frame portion 458 in an occlusal or upward direction. Towards their top ends, the clipping arms 448 have a radially projecting bulge portion 4418. The clipping arms 448 of the clip structure are elastically deformable or bendable towards an interior of the coupling sleeve 48. In an initial or non-transform ed state, the clipping arms 448 are in a liaising position. When being elastically bent or transformed towards the interior of the coupling sleeve 48, the clipping arms 448 are in an intermediate position. In the liaising position, the outer ends of the clipping arms 448 are the laterally outermost sections of the clip structure. In other words, in the liaising position, the bulge portions 4418 of the clipping arms 448 define the largest circumference or diameter of the clip structure.

The interior of the coupling sleeve 48 is formed by a straight axial bore 438 extending between an apical opening 418 located at an apical end of the cylinder section 4548 of the frame portion 458 and an occlusal opening 428 located at an occlusal end of the clipping arms 448. The axial bore 438 forms a head socket section 4318 at an interior side of the bulge portions 4418 of the clipping arms 448, which head socket section 4318 is equipped with an inner coupling thread 4328.

The screw member 38 is a single piece screw arrangement equipped with an occlusal head portion 318 and an apical fastening thread portion 328. The occlusal head portion 318 is equipped with an outer coupling thread 338 and the apical fastening thread portion 328 is equipped with a fastening thread 348. The outer coupling thread 338 is configured to convert a rotational movement of about 360° into an axial movement of a first distance and the fastening thread 348 is configured to convert a rotational movement of about 360° into an axial movement of a second distance. Thereby, the first distance is smaller than the second distance.

In between the occlusal head portion 318 and the apical fastening thread portion 328, the screw member 38 has a rod portion 358 excluding an outer thread. The rod portion 358 has a radially projecting collar section 378 being the laterally outermost section of the screw member 38. The collar section 378 has a slanted or conical bottom end side.

The post body 281 has a partially cylindrical shape equipped with a flange-like shoulder portion 268. It is provided with a straight central axial passage 238. Adjacent to the shoulder portion 268, the post body 281 has a downwardly or apically tapering cone portion 288. Below or apically of the cone portion 288, an outer circumference of the post body 281 is equipped with axial indexing grooves 278. Similarly, above or occlusally of the shoulder portion 276, an outer circumference of the post body 281 is provided with axial indexing bulges 248. Further, the post body 281 has an apical aperture 211 and an occlusal aperture 228, wherein the passage 238 extends between the apical aperture 218 and the occlusal aperture 228.

The dental implant 58 has a socket 518 with an upwardly or occlusally widening cone section 538 which corresponds to the cone portion of the post body 281. Further, the socket 518 is equipped with an indexing structure matching the indexing grooves 278 of the post body 281. Below or apically of the indexing structure, the socket 518 is equipped with an inner fixation thread 528 which is the counterpart to the fastening thread 348 of the screw member 38.

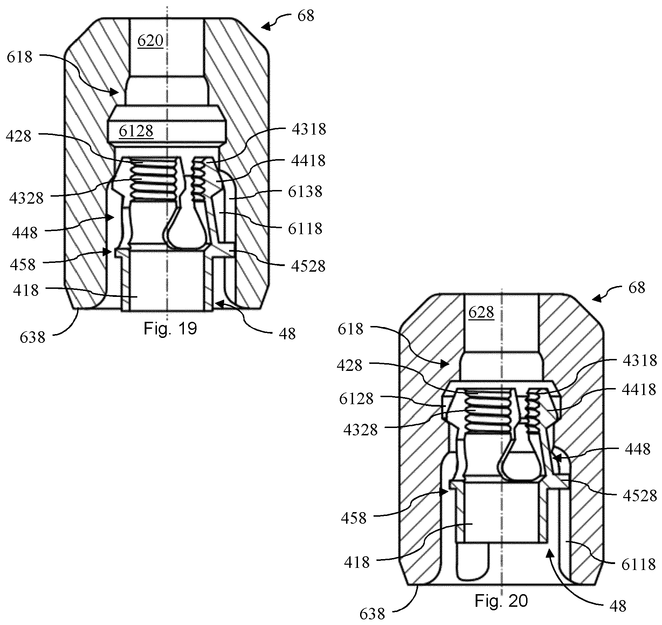

In Fig. 19 and Fig. 20, the coupling sleeve 48 is shown when being placed into the dental crown 68 in a fourth embodiment of a method according to the disclosure. More specifically, as depicted in Fig. 19, the coupling sleeve 48 is upwardly inserted in the cavity 618 of the dental crown 68. Thereby, the coupling sleeve 48 is oriented such that the indexing geometry of the ring section 4528 fits the axial indexing indentations 6138 of the stem section 6118 of the cavity 618. Thus, the coupling sleeve 48 is in a predefined orientation to the dental crown 68 which cannot be changed by a rotational movement of the coupling sleeve relative to the dental crown 68. The indexing geometry of the ring section 4528 and the axial indexing indentations 6138 together form anti-rotational and guiding means.

Between the stem section 6118 and the cave section 6128, the cavity 618 has a constriction portion which has a smaller inner diameter than the outer diameter defined by the bulge portions 4418 of the clipping arms 448. Thus, for upwardly passing the constriction portion of the cavity 618, the clipping arms 448 are bent towards the interior of the coupling sleeve 48. In other words, the constriction portion inwardly forces the clipping arms 448 such that they are elastically transformed from the original liaising position into the intermediate position.

When being further upwardly moved, as depicted in Fig. 20, the clipping arms 448 are moved back into the liaising position and the bulge portions 4418 of the clipping arms 448 are located in the cave section 6128 of the cavity 618. Thus, when the coupling sleeve 48 is inserted into the cavity 618 of the dental crown 68, the clipping arms 448 snap into the cave section 6128 of the cavity 618. In this position, the coupling sleeve 48 is held in the dental crown 68.

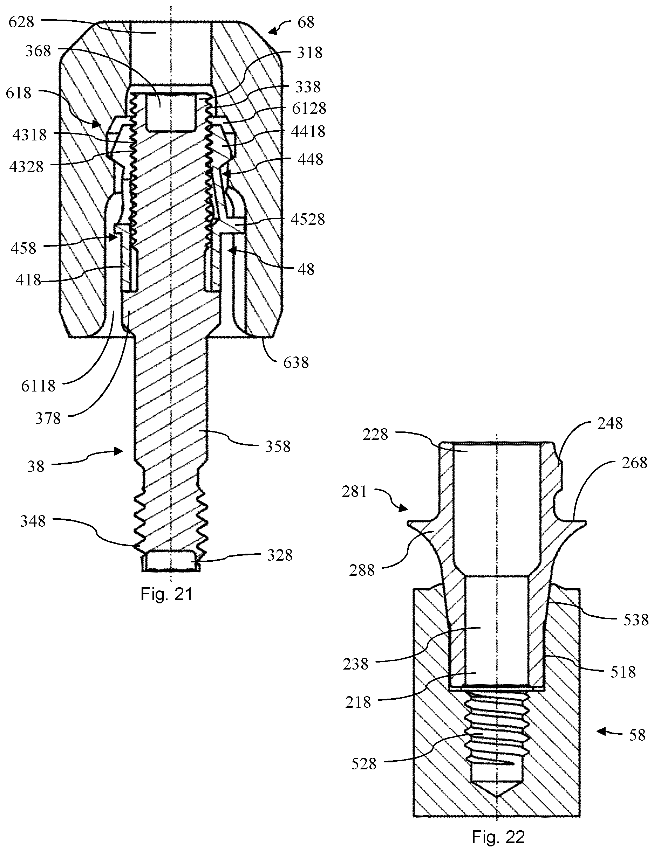

Fig. 21 shows a next step of the method in which the screw member 38 is connected to the coupling sleeve 48 held in the dental crown 68. In particular, the screw member 38 is upwardly inserted into the coupling sleeve 48. More specifically, the screw member 38 is rotated such that the coupling thread 338 of the occlusal head portion 318 engages the coupling thread 4328 of the head socket section 4318 of the axial bore 438 of the coupling sleeve 48. By further rotating the screw member 38, it is upwardly moved until a flat upper end of the collar section 378 abuts the bottom end of the frame portion 458 of the coupling sleeve 48. Like this, it is prevented that the screw member 38 is inserted into the coupling sleeve 48 to an inappropriate extent.

In this configuration, the screw member 38 blocks any movement of the clipping arms 448 of the coupling sleeve 48. In particular, a movement of the clipping arms 448 towards the interior of the coupling sleeve 48 is prevented such that the clipping arms 448 are locked in the liaising position by the screw member 38. Like this, the coupling sleeve 48 together with the screw member 38 are fixed to the dental crown 68.

In Fig. 22 the post body 28 is shown in a further step of the method when being set into the socket 518 of the dental implant 58. Thereby, the cone portion 288 of the post body 281 abuts the cone section 538 of the socket 518 of the dental implant 58. The indexing structure of the socket 518 engage the indexing grooves 278 of the post body 28 such that the post body 28 is in a predefined orientation relative to the dental implant 58. The indexing structure of the socket 518 and the indexing grooves 278 of the post body 28 provide anti-rotational means.

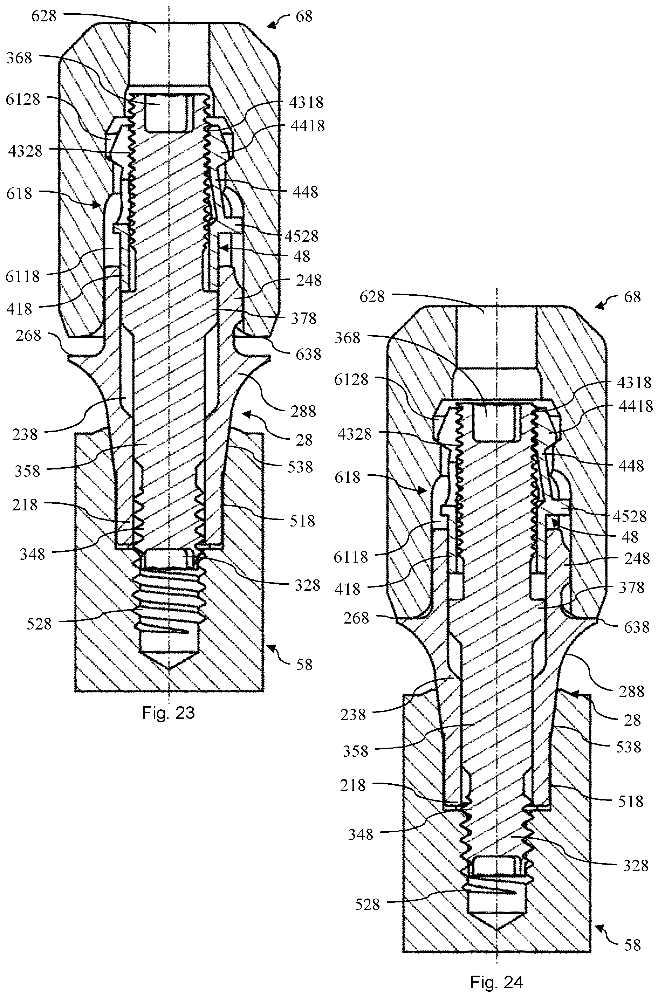

Fig. 23 shows another step of the method, in which the assembly of the dental crown 68, the coupling sleeve 48 and the screw member 38 are set positioned in the post body 28 set in the dental implant 58. Thereby, the screw member 38 extends through the passage 238 of the post body 28 such that the bottom end of the thread portion 328 is arranged on top of the fixation thread 528 of the socket 518.

The indexing bulges 248 of the post body 28 are located in the indexing indentations 6138 of the cavity 618 of the dental crown 68 such that the dental crown 68 is in a predefined orientation relative to the dental implant 58.

In a further step of the method, the screw member 38 is turned such that its thread portion 328 engages the fixation thread 528 of the dental implant 58. By further rotating the screw member 38, as shown in Fig. 24, the post body 28 is pressed onto the dental implant 58 and a lower abutting face 638 of the dental crown 68 is pressed onto the top end of the shoulder portion 268 of the post body 28. In particular, since the first distance of the outer coupling thread 338 or inner coupling thread 4328, respectively, is smaller than the second distance of the fastening thread 348 or inner fixation thread 528, respectively, the abutting face 638 of the dental crown 68 is pressed onto the shoulder portion 288 of the post body 28 while fixing the screw member 38 to the post body 28 and the dental implant 58 with a comparably large force. Still, the occlusal head portion 318 of the screw member 38 is located adjacent to the clipping arms 448 thereby locking the clipping arms 448 in the liaising position. Like this, a tight and secure connection between the dental crown 68 and dental implant 58 is achieved via the coupling sleeve 48 and the post body 28.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative or exemplary and not restrictive. Various mechanical, compositional, structural, electrical, and operational changes may be made without departing from the scope of this description and the claims. In some instances, well-known circuits, structures and techniques have not been shown in detail in order not to obscure the invention. Thus, it will be understood that changes and modifications may be made by those of ordinary skill within the scope of the following claims. In particular, the present invention covers further embodiments with any combination of features from different embodiments described above and below.

The disclosure also covers all further features shown in the Figs individually although they may not have been described in the afore or following description. Also, single alternatives of the embodiments described in the figures and the description and single alternatives of features thereof can be disclaimed from the subject matter of the invention or from disclosed subject matter. The disclosure comprises subject matter consisting of the features defined in the claims or the exemplary embodiments as well as subject matter comprising said features.

Furthermore, in the claims the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. The term "about" in the context of a given numerate value or range refers to a value or range that is, e.g., within 20%, within 10%, within 5%, or within 2% of the given value or range. Components described as coupled or connected may be electrically or mechanically directly coupled, or they may be indirectly coupled via one or more intermediate components. Any reference signs in the claims should not be construed as limiting the scope.

## Claims

1. An abutment assembly (1; 10; 18; 19) for connecting a dental restoration (6; 60; 68; 69) to a dental implant (5; 50; 58; 59), comprising
a post body (2; 20; 281; 29), wherein the post body (2; 20; 281; 29) has an apical aperture (21; 210; 218; 219), an occlusal aperture (22; 220; 228; 229) and an axial passage (23; 230; 238; 239) extending between the apical aperture (21; 210; 218; 219) and the occlusal aperture (22; 220; 228; 229);
a screw arrangement (3; 30; 38; 39), wherein the screw arrangement (3; 30; 38; 39) has an occlusal head portion (311; 310; 318; 3119) and an apical fastening thread portion (321; 320; 328; 3219); and
a coupling sleeve (4; 40; 48; 49), wherein the coupling sleeve (4; 40; 48; 49) has an apical opening (41; 410; 418; 419), an occlusal opening (42; 420; 428; 429), an axial bore (43; 430; 438; 439) extending between the apical opening (41; 410; 418; 419) and the occlusal opening (42; 420; 428; 429), and a clip structure (44; 440; 448; 449) configured to elastically deform from a liaising position, in which the clip structure (44; 440; 448; 449) is not deformed, to an intermediate position, in which the clip structure (44; 440; 448; 449) is elastically deformed towards the axial bore (43; 430; 438; 439); and wherein
the axial bore (43; 430; 438; 439) of the coupling sleeve (4; 40; 48; 49) is equipped with a head socket section (431; 4310; 4318; 4319) configured to receive the occlusal head portion (311; 310; 318; 3119) of the screw arrangement (3; 30; 38; 39), and
the coupling sleeve (4; 40; 48; 49) is configured such that when the occlusal head portion (311; 310; 318; 3119) is received in the head socket section (431; 4310; 4318; 4319) and positioned adjacent to the clip structure (44; 440; 448; 449), elastic transformation of the clip structure (44; 440; 448; 449) is prevented and the clip structure (44; 440; 448; 449) is thereby locked in the liaising position

2. The abutment assembly (1; 10; 18; 19) of the preceding claim, wherein the head socket section (431; 4310; 4318; 4319) of the axial bore (43; 430; 438; 439) of the coupling sleeve (4; 40; 48; 49) has an inner coupling thread (432; 4320; 4328) and the occlusal head portion (311; 310; 318; 3119) of the screw arrangement (3; 30; 38; 39) has an outer coupling thread (312; 330; 338) corresponding to the inner coupling thread (432; 4320; 4328) of the axial bore (43; 430; 438; 439) of the coupling sleeve (4; 40; 48; 49), and wherein preferably the screw arrangement (3; 30; 38; 39) and the coupling sleeve (4; 40; 48; 49) are configured to screw the screw arrangement (3; 30; 38; 39) through the apical opening (41; 410; 418; 419) into the head socket section (431; 4310; 4318; 4319) of the axial bore (43; 430; 438; 439) of the coupling sleeve (4; 40; 48; 49) such that the inner coupling thread (432; 4320; 4328) of the head socket section (431; 4310; 4318; 4319) of the axial bore (43; 430; 438; 439) of the coupling sleeve (4; 40; 48; 49) and the outer coupling thread (312; 330; 338) of the occlusal head portion (311; 310; 318; 3119) of the screw arrangement (3; 30; 38; 39) inter-engage when the head socket section (431; 4310; 4318; 4319) of the axial bore (43; 430; 438; 439) of the coupling sleeve (4; 40; 48; 49) receives the occlusal head portion (311; 310; 318; 3119) of the screw arrangement (3; 30; 38; 39).

3. The abutment assembly (1; 10; 18; 19) of the preceding claim, wherein the outer coupling thread (312; 330; 338) of the occlusal head portion (311; 310; 318; 3119) of the screw arrangement (3; 30; 38; 39) is configured to convert a rotational movement of about 360° into an axial movement of a first distance, the apical fastening thread portion (321; 320; 328; 3219) has a fastening thread being configured to convert a rotational movement of about 360° into an axial movement of a second distance, and the first distance is smaller than the second distance.

4. The abutment assembly (1; 10; 18; 19) of the preceding claim, wherein the head socket section (431; 4310; 4318; 4319) of the axial bore (43; 430; 438; 439) of the coupling sleeve (4; 40; 48; 49) has a conical seat tapering towards the apical opening (41; 410; 418; 419) of the coupling sleeve (4; 40; 48; 49) and the occlusal head portion (311; 310; 318; 3119) of the screw arrangement (3; 30; 38; 39) has cone section corresponding to the conical seat of the axial bore (43; 430; 438; 439) of the coupling sleeve (4; 40; 48; 49).

5. The abutment assembly (1; 10; 18; 19) of any one of the preceding claims, wherein the coupling sleeve (4; 40; 48; 49) comprises an essentially rigid frame portion (45; 450; 458; 459) and the clip structure (44; 440; 448; 449) of the coupling sleeve (4; 40; 48; 49) has a clipping arm extending from the frame portion (45; 450; 458; 459) of the coupling sleeve (4; 40; 48; 49).

6. The abutment assembly (1; 10; 18; 19) of the preceding claim, wherein the frame portion (45; 450; 458; 459) of the coupling sleeve (4; 40; 48; 49) has a lateral window into which the clipping arm of the clip structure (44; 440; 448; 449) of the coupling sleeve (4; 40; 48; 49) extends.

7. The abutment assembly (1; 10; 18; 19) of any one of the two preceding claims, wherein the clipping arm is elastically deformable towards an axis of the coupling sleeve (4; 40; 48; 49).

8. The abutment assembly (1; 10; 18; 19) of any one of the preceding claims, wherein the clip structure (44; 440; 448; 449) of the coupling sleeve (4; 40; 48; 49) has a bulge forming a laterally outermost section of the coupling sleeve (4; 40; 48; 49) in the liaising position,

9. The abutment assembly (1; 10; 18; 19) of any preceding claim, wherein the screw arrangement (3; 30; 38; 39) comprises a coupling screw and a fastening screw, wherein the occlusal head portion (311; 310; 318; 3119) is incorporated into the coupling screw and the apical fastening thread portion (321; 320; 328; 3219) is incorporated into the fastening screw.

10. The abutment assembly (1; 10; 18; 19) of the preceding claim, wherein the axial passage (23; 230; 238; 239) of the post body (2; 20; 281; 29) has an inner sleeve thread and the coupling screw of the screw arrangement (3; 30; 38; 39) has an apical outer body thread corresponding to the inner sleeve thread of the axial passage (23; 230; 238; 239) of the post body (2; 20; 281; 29), and wherein the axial passage (23; 230; 238; 239) of the post body (2; 20; 281; 29) has an inner implant thread and the fastening screw of the screw arrangement (3; 30; 38; 39) has an occlusal outer body thread corresponding to the inner body thread of the axial passage (23; 230; 238; 239) of the post body (2; 20; 281; 29).

11. The abutment assembly (1; 10; 18; 19) of any one of the preceding claims, comprising a dental implant (5; 50; 58; 59) with a socket configured to receive the apical fastening thread portion (321; 320; 328; 3219) of the screw arrangement (3; 30; 38; 39), and wherein preferably the post body (2; 20; 281; 29) has a cone portion and the socket of the dental implant (5; 50; 58; 59) has a conical entry section configured to abut the cone portion of the post body (2; 20; 281; 29).

12. The abutment assembly (1; 10; 18; 19) of any one of the preceding claims, comprising the dental restoration (6; 60; 68; 69) having a cavity configured to receive the clipping structure of the coupling sleeve (4; 40; 48; 49) to connect the coupling sleeve (4; 40; 48; 49) to the dental implant (5; 50; 58; 59).

13. The abutment assembly (1; 10; 18; 19) of the preceding claim, wherein the clip structure (44; 440; 448; 449) of the coupling sleeve (4; 40; 48; 49) is configured to provide a snap-fit connection between the coupling sleeve (4; 40; 48; 49) and the dental restoration (6; 60; 68; 69).

14. The abutment assembly (1; 10; 18; 19) of any one of the two preceding claims, wherein the cavity of the dental restoration (6; 60; 68; 69) comprises a stem section and a cave section radially protruding the stem section, and wherein preferably the cavity of the dental restoration (6; 60; 68; 69) and the coupling sleeve (4; 40; 48; 49) are arranged such that the clip structure (44; 440; 448; 449) of the coupling sleeve (4; 40; 48; 49) can pass through the stem section of the cavity of the dental restoration (6; 60; 68; 69) when the clip structure (44; 440; 448; 449) of the coupling sleeve (4; 40; 48; 49) is in the intermediate position, and the clip structure (44; 440; 448; 449) of the coupling sleeve (4; 40; 48; 49) cannot pass through the stem section of the cavity of the dental restoration (6; 60; 68; 69) when clip structure (44; 440; 448; 449) of the coupling sleeve (4; 40; 48; 49) is in the liaising position.

15. The abutment assembly (1; 10; 18; 19) of any one of the three preceding claims, wherein the dental restoration (6; 60; 68; 69) has an abutting section and the post body (2; 20; 281; 29) has a corresponding shoulder portion configured to abut the abutting section of the dental restoration (6; 60; 68; 69).

## Patentansprüche

1. Abutmentanordnung (1; 10; 18; 19) zum Verbinden einer Dentalrestauration (6; 60; 68; 69) mit einem Dentalimplantat (5; 50; 58; 59), umfassend:
einen Pfostenkörper (2; 20; 281; 29), wobei der Pfostenkörper (2; 20; 281; 29) eine apikale Öffnung (21; 210; 218; 219), eine okklusale Öffnung (22; 220; 228; 229) und einen sich zwischen der apikalen Öffnung (21; 210; 218; 219) und der okklusalen Öffnung (22; 220; 228; 229) erstreckenden axialen Durchgang (23; 230; 238; 239) aufweist;
eine Schraubenanordnung (3; 30; 38; 39), wobei die Schraubenanordnung (3; 30; 38; 39) einen okklusalen Kopfabschnitt (311; 310; 318; 3119) und einen apikalen Befestigungsgewindeabschnitt (321; 320; 328; 3219) aufweist; und
eine Kopplungshülse (4; 40; 48; 49), wobei die Kopplungshülse (4; 40; 48; 49) eine apikale Öffnung (41; 410; 418; 419), eine okklusale Öffnung (42; 420; 428; 429), eine sich zwischen der apikalen Öffnung (41; 410; 418; 419) und der okklusalen Öffnung (42; 420; 428; 429) erstreckende axiale Bohrung (43; 430; 438; 439) und eine Klammerstruktur (44; 440; 448; 449), konfiguriert zum elastischen Verformen von einer Verbindungsposition, in welcher die Klammerstruktur (44; 440; 448; 449) nicht verformt ist, bis zu einer Zwischenposition, in welcher die Klammerstruktur (44; 440; 448; 449) in Richtung der axialen Bohrung (43; 430; 438; 439) elastisch verformt ist, aufweist; und wobei
die axiale Bohrung (43; 430; 438; 439) der Kopplungshülse (4; 40; 48; 49) mit einem Kopfsockelabschnitt (431; 4310; 4318; 4319), konfiguriert zum Aufnehmen des okklusalen Kopfabschnitts (311; 310; 318; 3119) der Schraubenanordnung (3; 30; 38; 39), ausgestattet ist, und
die Kopplungshülse (4; 40; 48; 49) so konfiguriert ist, dass, wenn der okklusale Kopfabschnitt (311; 310; 318; 3119) in dem Kopfsockelabschnitt (431; 4310; 4318; 4319) aufgenommen und der Klammerstruktur (44; 440; 448; 449) benachbart positioniert ist, eine elastische Transformation der Klammerstruktur (44; 440; 448; 449) verhindert wird und die Klammerstruktur (44; 440; 448; 449) dadurch in der Verbindungsposition blockiert wird.

2. Abutmentanordnung (1; 10; 18; 19) nach dem vorhergehenden Anspruch, wobei der Kopfsockelabschnitt (431; 4310; 4318; 4319) der axialen Bohrung (43; 430; 438; 439) der Kopplungshülse (4; 40; 48; 49) ein inneres Kopplungsgewinde (432; 4320; 4328) aufweist und der okklusale Kopfabschnitt (311; 310; 318; 3119) der Schraubenanordnung (3; 30; 38; 39) ein äußeres Kopplungsgewinde (312; 330; 338), entsprechend dem inneren Kopplungsgewinde (432; 4320; 4328) der axialen Bohrung (43; 430; 438; 439) der Kopplungshülse (4; 40; 48; 49), aufweist, und wobei vorzugsweise die Schraubenanordnung (3; 30; 38; 39) und die Kopplungshülse (4; 40; 48; 49) dazu konfiguriert sind, die Schraubenanordnung (3; 30; 38; 39) durch die apikale Öffnung (41; 410; 418; 419) in den Kopfsockelabschnitt (431; 4310; 4318; 4319) der axialen Bohrung (43; 430; 438; 439) der Kopplungshülse (4; 40; 48; 49) zu schrauben, sodass das innere Kopplungsgewinde (432; 4320; 4328) des Kopfsockelabschnitts (431; 4310; 4318; 4319) der axialen Bohrung (43; 430; 438; 439) der Kopplungshülse (4; 40; 48; 49) und das äußere Kopplungsgewinde (312; 330; 338) des okklusalen Kopfabschnitts (311; 310; 318; 3119) der Schraubenanordnung (3; 30; 38; 39) miteinander in Eingriff gelangen, wenn der Kopfsockelabschnitt (431; 4310; 4318; 4319) der axialen Bohrung (43; 430; 438; 439) der Kopplungshülse (4; 40; 48; 49) den okklusalen Kopfabschnitt (311; 310; 318; 3119) der Schraubenanordnung (3; 30; 38; 39) aufnimmt.

3. Abutmentanordnung (1; 10; 18; 19) nach dem vorhergehenden Anspruch, wobei das äußere Kopplungsgewinde (312; 330; 338) des okklusalen Kopfabschnitts (311; 310; 318; 3119) der Schraubenanordnung (3; 30; 38; 39) dazu konfiguriert ist, eine Drehbewegung von etwa 360° in eine axiale Bewegung über eine erste Distanz umzuwandeln, der apikale Befestigungsgewindeabschnitt (321; 320; 328; 3219) ein Befestigungsgewinde aufweist, das dazu konfiguriert ist, eine Drehbewegung um etwa 360° in eine axiale Bewegung über eine zweite Distanz umzuwandeln, und die erste Distanz kleiner als die zweite Distanz ist.

4. Abutmentanordnung (1; 10; 18; 19) nach dem vorhergehenden Anspruch, wobei der Kopfsockelabschnitt (431; 4310; 4318; 4319) der axialen Bohrung (43; 430; 438; 439) der Kopplungshülse (4; 40; 48; 49) einen konischen Sitz aufweist, der sich in Richtung der apikalen Öffnung (41; 410; 418; 419) der Kopplungshülse (4; 40; 48; 49) verjüngt, und der okklusale Kopfabschnitt (311; 310; 318; 3119) der Schraubenanordnung (3; 30; 38; 39) einen dem konischen Sitz der axialen Bohrung (43; 430; 438; 439) der Kopplungshülse (4; 40; 48; 49) entsprechenden Konusabschnitt aufweist.

5. Abutmentanordnung (1; 10; 18; 19) nach einem der vorhergehenden Ansprüche, wobei die Kopplungshülse (4; 40; 48; 49) einen im Wesentlichen starren Rahmenabschnitt (45; 450; 458; 459) umfasst und die Klammerstruktur (44; 440; 448; 449) der Kopplungshülse (4; 40; 48; 49) einen sich vom Rahmenabschnitt (45; 450; 458; 459) der Kopplungshülse (4; 40; 48; 49) erstreckenden Klammerarm aufweist.

6. Abutmentanordnung (1; 10; 18; 19) nach dem vorhergehenden Anspruch, wobei der Rahmenabschnitt (45; 450; 458; 459) der Kopplungshülse (4; 40; 48; 49) ein seitliches Fenster aufweist, in das sich der Klammerarm der Klammerstruktur (44; 440; 448; 449) der Kopplungshülse (4; 40; 48; 49) erstreckt.

7. Abutmentanordnung (1; 10; 18; 19) nach einem der beiden vorhergehenden Ansprüche, wobei der Klammerarm in Richtung einer Achse der Kopplungshülse (4; 40; 48; 49) elastisch verformbar ist.

8. Abutmentanordnung (1; 10; 18; 19) nach einem der vorhergehenden Ansprüche, wobei die Klammerstruktur (44; 440; 448; 449) der Kopplungshülse (4; 40; 48; 49) eine Wölbung aufweist, die in der Verbindungsposition einen seitlich äußersten Abschnitt der Kopplungshülse (4; 40; 48; 49) bildet.

9. Abutmentanordnung (1; 10; 18; 19) nach einem der vorhergehenden Ansprüche, wobei die Schraubenanordnung (3; 30; 38; 39) eine Kopplungsschraube und eine Befestigungsschraube umfasst, wobei der okklusale Kopfabschnitt (311; 310; 318; 3119) in die Kopplungsschraube integriert ist und der apikale Befestigungsgewindeabschnitt (321; 320; 328; 3219) in die Befestigungsschraube integriert ist.

10. Abutmentanordnung (1; 10; 18; 19) nach dem vorhergehenden Anspruch, wobei der axiale Durchgang (23; 230; 238; 239) des Pfostenkörpers (2; 20; 281; 29) ein Innenhülsengewinde aufweist und die Kopplungsschraube der Schraubenanordnung (3; 30; 38; 39) ein dem Innenhülsengewinde des axialen Durchgangs (23; 230; 238; 239) des Pfostenkörpers (2; 20; 281; 29) entsprechendes apikales Außenkörpergewinde aufweist, und wobei der axiale Durchgang (23; 230; 238; 239) des Pfostenkörpers (2; 20; 281; 29) ein inneres Implantatgewinde aufweist und die Befestigungsschraube der Schraubenanordnung (3; 30; 38; 39) ein dem Innenkörpergewinde des axialen Durchgangs (23; 230; 238; 239) des Pfostenkörpers (2; 20; 281; 29) entsprechendes okklusales Außenkörpergewinde aufweist.

11. Abutmentanordnung (1; 10; 18; 19) nach einem der vorhergehenden Ansprüche, umfassend ein Dentalimplantat (5; 50; 58; 59) mit einem Sockel, dazu konfiguriert, den apikalen Befestigungsgewindeabschnitt (321; 320; 328; 3219) der Schraubenanordnung (3; 30; 38; 39) aufzunehmen, und wobei vorzugsweise der Pfostenkörper (2; 20; 281; 29) einen konischen Abschnitt und der Sockel des Dentalimplantats (5; 50; 58; 59) einen konischen Eintrittsabschnitt, dazu konfiguriert, an den konischen Abschnitt des Pfostenkörpers (2; 20; 281; 29) anzugrenzen, aufweist.

12. Abutmentanordnung (1; 10; 18; 19) nach einem der vorhergehenden Ansprüche, umfassend die Dentalrestauration (6; 60; 68; 69) mit einer Kavität, die dazu konfiguriert ist, die Klammerstruktur der Kopplungshülse (4; 40; 48; 49) aufzunehmen, um die Kopplungshülse (4; 40; 48; 49) mit dem Dentalimplantat (5; 50; 58; 59) zu verbinden.

13. Abutmentanordnung (1; 10; 18; 19) nach dem vorhergehenden Anspruch, wobei die Klammerstruktur (44; 440; 448; 449) der Kopplungshülse (4; 40; 48; 49) dazu konfiguriert ist, zwischen der Kopplungshülse (4; 40; 48; 49) und der Dentalrestauration (6; 60; 68; 69) eine Rastverbindung bereitzustellen.

14. Abutmentanordnung (1; 10; 18; 19) nach einem der beiden vorhergehenden Ansprüche, wobei der Hohlraum der Dentalrestauration (6; 60; 68; 69) einen Stammabschnitt und einen vom Stammabschnitt radial vorstehenden Höhlenabschnitt umfasst, und wobei vorzugsweise der Hohlraum der Dentalrestauration (6; 60; 68; 69) und die Kopplungshülse (4; 40; 48; 49) so angeordnet sind, dass die Klammerstruktur (44; 440; 448; 449) der Kopplungshülse (4; 40; 48; 49) durch den Stammabschnitt des Hohlraums der Dentalrestauration (6; 60; 68; 69) verlaufen kann, wenn sich die Klammerstruktur (44; 440; 448; 449) der Kopplungshülse (4; 40; 48; 49) in der Zwischenposition befindet, und die Klammerstruktur (44; 440; 448; 449) der Kopplungshülse (4; 40; 48; 49) nicht durch den Stammabschnitt des Hohlraums der Dentalrestauration (6; 60; 68; 69) verlaufen kann, wenn sich die Klammerstruktur (44; 440; 448; 449) der Kopplungshülse (4; 40; 48; 49) in der Verbindungsposition befindet.

15. Abutmentanordnung (1; 10; 18; 19) nach einem der drei vorhergehenden Ansprüche, wobei die Dentalrestauration (6; 60; 68; 69) einen angrenzenden Abschnitt aufweist und der Pfostenkörper (2; 20; 281; 29) einen entsprechenden Schulterabschnitt aufweist, der dazu konfiguriert ist, an den angrenzenden Abschnitt der Dentalrestauration (6; 60; 68; 69) anzugrenzen.

## Revendications

1. Ensemble butée (1 ; 10 ; 18 ; 19) destiné à relier une restauration dentaire (6 ; 60 ; 68 ; 69) à un implant dentaire (5 ; 50 ; 58 ; 59), comprenant
un corps de tige (2 ; 20 ; 281 ; 29), dans lequel le corps de tige (2 ; 20 ; 281 ; 29) a un orifice apical (21 ; 210 ; 218 ; 219), un orifice occlusal (22 ; 220 ; 228 ; 229) et un passage axial (23 ; 230 ; 238 ; 239) s'étendant entre l'orifice apical (21 ; 210 ; 218 ; 219) et l'orifice occlusal (22 ; 220 ; 228 ; 229) ;
un agencement de vis (3 ; 30 ; 38 ; 39), dans lequel l'agencement de vis (3 ; 30 ; 38 ; 39) a une partie de tête occlusale (311 ; 310 ; 318 ; 3119) et une partie de filetage de fixation apicale (321 ; 320 ; 328 ; 3219) ; et
un manchon de couplage (4 ; 40 ; 48 ; 49), dans lequel le manchon de couplage (4 ; 40 ; 48 ; 49) a une ouverture apicale (41 ; 410 ; 418 ; 419), une ouverture occlusale (42 ; 420 ; 428 ; 429), un trou axial (43 ; 430 ; 438 ; 439) s'étendant entre l'ouverture apicale (41 ; 410 ; 418 ; 419) et l'ouverture occlusale (42 ; 420 ; 428 ; 429), et une structure d'encliquetage (44 ; 440 ; 448 ; 449) conçue pour se déformer de manière élastique à partir d'une position de liaison, dans laquelle la structure d'encliquetage (44 ; 440 ; 448 ; 449) n'est pas déformée, jusqu'à une position intermédiaire, dans laquelle la structure d'encliquetage (44 ; 440 ; 448 ; 449) est déformée de manière élastique vers le trou axial (43 ; 430 ; 438 ; 439) ; et dans lequel
le trou axial (43 ; 430 ; 438 ; 439) du manchon de couplage (4 ; 40 ; 48 ; 49) est équipé d'une section de douille de tête (431 ; 4310 ; 4318; 4319) conçue pour recevoir la partie de tête occlusale (311 ; 310 ; 318 ; 3119) de l'agencement de vis (3 ; 30 ; 38 ; 39), et
le manchon de couplage (4 ; 40 ; 48 ; 49) est conçu de telle sorte que lorsque la partie de tête occlusale (311 ; 310 ; 318 ; 3119) est reçue dans la section de douille de tête (431 ; 4310 ; 4318 ; 4319) et positionnée de manière adjacente à la structure d'encliquetage (44 ; 440 ; 448 ; 449), la transformation élastique de la structure d'encliquetage (44 ; 440 ; 448 ; 449) est empêchée et la structure d'encliquetage (44 ; 440 ; 448 ; 449) est ainsi verrouillée dans la position de liaison.

2. Ensemble butée (1 ; 10 ; 18 ; 19) selon la revendication précédente, dans lequel la section de douille de tête (431 ; 4310 ; 4318 ; 4319) du trou axial (43 ; 430 ; 438 ; 439) du manchon de couplage (4 ; 40 ; 48 ; 49) a un filetage de couplage interne (432 ; 4320 ; 4328) et la partie de tête occlusale (311 ; 310 ; 318 ; 3119) de l'agencement de vis (3 ; 30 ; 38 ; 39) a un filetage de couplage externe (312 ; 330 ; 338) correspondant au filetage de couplage interne (432 ; 4320 ; 4328) du trou axial (43 ; 430 ; 438 ; 439) du manchon de couplage (4 ; 40 ; 48 ; 49), et dans lequel de préférence l'agencement de vis (3 ; 30 ; 38 ; 39) et le manchon de couplage (4 ; 40 ; 48 ; 49) sont conçus pour visser l'agencement de vis (3 ; 30 ; 38 ; 39) à travers l'ouverture apicale (41 ; 410 ; 418 ; 419) dans la section de douille de tête (431 ; 4310 ; 4318 ; 4319) du trou axial (43 ; 430 ; 438 ; 439) du manchon de couplage (4 ; 40 ; 48 ; 49) de telle sorte que le filetage de couplage interne (432 ; 4320 ; 4328) de la section de douille de tête (431 ; 4310 ; 4318 ; 4319) du trou axial (43 ; 430 ; 438 ; 439) du manchon de couplage (4 ; 40 ; 48 ; 49) et le filetage de couplage externe (312 ; 330 ; 338) de la partie de tête occlusale (311 ; 310 ; 318 ; 3119) de l'agencement de vis (3 ; 30 ; 38 ; 39) viennent en prise l'un avec l'autre lorsque la section de douille de tête (431 ; 4310 ; 4318 ; 4319) du trou axial (43 ; 430 ; 438 ; 439) du manchon de couplage (4 ; 40 ; 48 ; 49) reçoit la partie de tête occlusale (311 ; 310 ; 318 ; 3119) de l'agencement de vis (3 ; 30 ; 38 ; 39).

3. Ensemble butée (1 ; 10 ; 18 ; 19) selon la revendication précédente, dans lequel le filetage de couplage externe (312 ; 330 ; 338) de la partie de tête occlusale (311 ; 310 ; 318 ; 3119) de l'agencement de vis (3 ; 30 ; 38 ; 39) est configuré pour convertir un mouvement de rotation d'environ 360° en un mouvement axial d'une première distance, la partie de filetage de fixation apicale (321 ; 320 ; 328 ; 3219) a un filetage de fixation conçu pour convertir un mouvement de rotation d'environ 360° en un mouvement axial d'une seconde distance, et la première distance est inférieure à la seconde distance.

4. Ensemble butée (1 ; 10 ; 18 ; 19) selon la revendication précédente, dans lequel la section de douille de tête (431 ; 4310 ; 4318 ; 4319) du trou axial (43 ; 430 ; 438 ; 439) du manchon de couplage (4 ; 40 ; 48 ; 49) a un siège conique s'effilant vers l'ouverture apicale (41 ; 410 ; 418 ; 419) du manchon de couplage (4 ; 40 ; 48 ; 49) et la partie de tête occlusale (311 ; 310 ; 318 ; 3119) de l'agencement de vis (3 ; 30 ; 38 ; 39) a une section de cône correspondant au siège conique du trou axial (43 ; 430 ; 438 ; 439) du manchon de couplage (4 ; 40 ; 48 ; 49).

5. Ensemble butée (1 ; 10 ; 18 ; 19) selon l'une quelconque des revendications précédentes, dans lequel le manchon de couplage (4 ; 40 ; 48 ; 49) comprend une partie de cadre essentiellement rigide (45 ; 450 ; 458 ; 459) et la structure d'encliquetage (44 ; 440 ; 448 ; 449) du manchon de couplage (4 ; 40 ; 48 ; 49) a un bras d'encliquetage s'étendant depuis la partie de cadre (45 ; 450 ; 458 ; 459) du manchon de couplage (4 ; 40 ; 48 ; 49).

6. Ensemble butée (1 ; 10 ; 18 ; 19) selon la revendication précédente, dans lequel la partie de cadre (45 ; 450 ; 458 ; 459) du manchon de couplage (4 ; 40 ; 48 ; 49) a une fenêtre latérale dans laquelle le bras d'encliquetage de la structure d'encliquetage (44 ; 440 ; 448 ; 449) du manchon de couplage (4 ; 40 ; 48 ; 49) s'étend.

7. Ensemble butée (1 ; 10 ; 18 ; 19) selon l'une quelconque des deux revendications précédentes, dans lequel le bras d'encliquetage est déformable de manière élastique vers un axe du manchon de couplage (4 ; 40 ; 48 ; 49).

8. Ensemble butée (1 ; 10 ; 18 ; 19) selon l'une quelconque des revendications précédentes, dans lequel la structure d'encliquetage (44 ; 440 ; 448 ; 449) du manchon de couplage (4 ; 40 ; 48 ; 49) a un renflement formant une section latéralement la plus externe du manchon de couplage (4 ; 40 ; 48 ; 49) dans la position de liaison.

9. Ensemble butée (1 ; 10 ; 18 ; 19) selon l'une quelconque des revendications précédentes, dans lequel l'agencement de vis (3 ; 30 ; 38 ; 39) comprend une vis de couplage et une vis de fixation, dans lequel la partie de tête occlusale (311 ; 310 ; 318 ; 3119) est incorporée dans la vis de couplage et la partie de filetage de fixation apicale (321 ; 320 ; 328 ; 3219) est incorporée dans la vis de fixation.

10. Ensemble butée (1 ; 10 ; 18 ; 19) selon la revendication précédente, dans lequel le passage axial (23 ; 230 ; 238 ; 239) du corps de tige (2 ; 20 ; 281 ; 29) a un filetage de manchon interne et la vis de couplage de l'agencement de vis (3 ; 30 ; 38 ; 39) a un filetage de corps externe apical correspondant au filetage de manchon interne du passage axial (23 ; 230 ; 238 ; 239) du corps de tige (2 ; 20 ; 281 ; 29), et dans lequel le passage axial (23 ; 230 ; 238 ; 239) du corps de tige (2 ; 20 ; 281 ; 29) a un filetage d'implant interne et la vis de fixation de l'agencement de vis (3 ; 30 ; 38 ; 39) a un filetage de corps externe occlusal correspondant au filetage de corps interne du passage axial (23 ; 230 ; 238 ; 239) du corps de tige (2 ; 20 ; 281 ; 29).

11. Ensemble butée (1 ; 10 ; 18 ; 19) selon l'une quelconque des revendications précédentes, comprenant un implant dentaire (5 ; 50 ; 58 ; 59) avec une douille conçue pour recevoir la partie de filetage de fixation apicale (321 ; 320 ; 328 ; 3219) de l'agencement de vis (3 ; 30 ; 38 ; 39), et dans lequel de préférence le corps de tige (2 ; 20 ; 281 ; 29) a une partie de cône et la douille de l'implant dentaire (5 ; 50 ; 58 ; 59) a une section d'entrée conique conçue pour venir en butée contre la partie de cône du corps de tige (2 ; 20 ; 281 ; 29).

12. Ensemble butée (1 ; 10 ; 18 ; 19) selon l'une quelconque des revendications précédentes, comprenant la restauration dentaire (6 ; 60 ; 68 ; 69) ayant une cavité conçue pour recevoir la structure d'encliquetage du manchon de couplage (4 ; 40 ; 48 ; 49) afin de relier le manchon de couplage (4 ; 40 ; 48 ; 49) à l'implant dentaire (5 ; 50 ; 58 ; 59).

13. Ensemble butée (1 ; 10 ; 18 ; 19) selon la revendication précédente, dans lequel la structure d'encliquetage (44 ; 440 ; 448 ; 449) du manchon de couplage (4 ; 40 ; 48 ; 49) est conçue pour fournir une liaison par encliquetage entre le manchon de couplage (4 ; 40 ; 48 ; 49) et la restauration dentaire (6 ; 60 ; 68 ; 69).

14. Ensemble butée (1 ; 10 ; 18 ; 19) selon l'une quelconque des deux revendications précédentes, dans lequel la cavité de la restauration dentaire (6 ; 60 ; 68 ; 69) comprend une section de racine et une section de cavité faisant saillie de manière radiale depuis la section de racine, et dans lequel de préférence la cavité de la restauration dentaire (6 ; 60 ; 68 ; 69) et le manchon de couplage (4 ; 40 ; 48 ; 49) sont agencés de telle sorte que la structure d'encliquetage (44 ; 440 ; 448 ; 449) du manchon de couplage (4 ; 40 ; 48 ; 49) peut passer à travers la section de racine de la cavité de la restauration dentaire (6 ; 60 ; 68 ; 69) lorsque la structure d'encliquetage (44 ; 440 ; 448 ; 449) du manchon de couplage (4 ; 40 ; 48 ; 49) est dans la position intermédiaire, et la structure d'encliquetage (44 ; 440 ; 448 ; 449) du manchon de couplage (4 ; 40 ; 48 ; 49) ne peut pas passer à travers la section de racine de la cavité de la restauration dentaire (6 ; 60 ; 68 ; 69) lorsque la structure d'encliquetage (44 ; 440 ; 448 ; 449) du manchon de couplage (4 ; 40 ; 48 ; 49) est dans la position de liaison.

15. Ensemble butée (1 ; 10 ; 18 ; 19) selon l'une quelconque des trois revendications précédentes, dans lequel la restauration dentaire (6 ; 60 ; 68 ; 69) a une section de butée et le corps de tige (2 ; 20 ; 281 ; 29) a une partie d'épaulement correspondante conçue pour venir en butée contre la section de butée de la restauration dentaire (6 ; 60 ; 68 ; 69).
